# EUROPEAN PATENT SPECIFICATION

(11) **EP 3 569 005 B1**
(45) Date of publication and mention of the grant of the patent: **26.08.2026**
(21) Application number: 18700321.5
(22) Date of filing: 09.01.2018
(51) Int. Cl.: H04W 4/06, H04W 4/00

(54) **MESSAGES BROADCASTING EXPLOITING DEVICE-TO-DEVICE TRANSMISSION**
NACHRICHTEN-BROADCASTING MIT AUSNUTZUNG VON VORRICHTUNG-ZU-VORRICHTUNG-ÜBERTRAGUNG
DIFFUSION DE MESSAGES EXPLOITANT LA TRANSMISSION DE DISPOSITIF À DISPOSITIF

(30) Priority: 16.01.2017 IT 201700003921
(43) Date of publication of application: 20.11.2019
(73) Proprietor: Telecom Italia S.p.A., 20123 Milano (IT)
(72) Inventor: CARETTI, Marco, 10148 Torino (IT); NARDINI, Giovanni, 56122 Pisa (IT); SABELLA, Dario, 10148 Torino (IT); STEA, Giovanni, 56122 Pisa (IT); VIRDIS, Antonio, 56122 Pisa (IT)
(74) Representative: Maccalli, Marco
(86) International application number: PCT/EP2018/050427
(87) International publication number: WO 2018/130508

(56) References cited:
- US-A1- 2012 303 745
- US-A1- 2016 066 168
- US-A1- 2016 286 601

## Description

### Background of the Invention

### Field of the Invention

The solution according to embodiments of the present invention refers to telecommunications. In detail, the solution according to embodiments of the present invention relates to the broadcast of messages among user terminals, or User Equipment - UE - (e.g., a smartphone, a tablet, a laptop, etc.) connected to a telecommunication network. In more detail, the solution according to embodiments of the present invention relates to a method and a system for broadcasting messages exploiting device-to-device, or D2D, transmission.

### Overview of the Related Art

Wireless communication networks offer the possibility to broadcast messages when the need arises. For example, it is desirable to broadcast emergency messages (e.g., in case of vehicular collision, natural disasters, etc.) or Distributed Hash Table, or DHT, lookup requests (e.g., in order to 'discover' Internet of Things, or loT; devices deployed in the proximity and information/functionalities offered by such loT devices), which are likely to be originated by UE. In addition, broadcast messages may comprise proximity-based advertisement messages, which are likely to be made available at a radio base station, or RBS (e.g., evolved node B, or eNB, in the Long Term Evolution, LTE, and Long Term Evolution - Advance, LTE-A, radio communication technologies), that manages communications over a served area, or cell, comprising UE that are wished to be reached by the proximity-based advertisement.

These messages must be propagated in a well-defined target area, or broadcast area, which not necessarily corresponds to a single cell of the wireless telecommunication network (e.g., the target area may comprise either a portion of a cell or may encompass more than one cell, or portions of cells).

Moreover, the broadcast of a message must be reliable and the broadcast area must be covered preferably in a short time, either because of a well-defined deadline, or because the performance of high-level applications that send these broadcast messages depends on how fast the broadcast messages propagate in the broadcast area.

The broadcast of messages should consume as few network resources as possible in order not to hamper the normal operation (e.g., UE to UE communications) of the wireless communication network.

In LTE and LTE-Advanced (LTE-A) wireless communication networks, D2D transmission may be exploited for implementing broadcast as proposed in G. Nardini, G. Stea, A. Virdis, D. Sabella, M. Caretti: "Broadcasting in LTE-Advanced networks using multihop D2D communications", PIMRC 2016, Valencia, September 5-7, 2016. The paper discloses that in an LTE-Advanced network, network-controlled Device-to-Device (D2D) communications can be combined in a multihop fashion to distribute broadcasts over user-defined (and possibly large) areas, with small latencies and occupying few resources.

US 2016/066168 A1 discloses that a wireless device that is a candidate for operating in the cooperative positioning advantageously activates that mode in response to detecting a warning situation. In some embodiments, the detection and/or activation operations are autonomously undertaken by the wireless device. In other embodiments, the wireless communication network provides warning situation detection and/or control of the cooperative positioning mode. More generally, the wireless communication network maintains a database identifying those wireless devices within a given service area that are cooperative positioning mode candidates-e.g., the devices having D2D communication capability and operational configurations that allow such operation. By the network providing such information in advance of a warning situation, the candidate devices have the information needed to efficiently discover or otherwise identify other such candidates.

### Summary of the Invention

The invention is defined by the claims.

The Applicant has observed that, generally, the expedients known in the art do not provide a reliable and controlled broadcast of messages and, at the same time, with a minimum impact on the operation of the communication network.

For example, the approach described in the paper mentioned above relies either on allocating static resources that UE can exploit for SideLink, or SL, transmissions or having the radio base station schedule SL transmissions upon the reception of a Random ACcess, or RAC, requests from UE that need to relay the message to be broadcasted.

Such expedient provokes a large number of collisions (either on the SL or on the RAC), which jeopardize a reliability of the broadcast and of forecast of a time instant at which the broadcast is completed. Moreover, a definition of geographical bounds of the target area of the broadcast is inaccurate.

The Applicant has therefore tackled the problem of how to solve, or at least mitigate, the drawbacks mentioned above.

Accordingly, the Applicant reached for a solution in which a radio base station (such as a eNB) guides the diffusion of message broadcast by means of D2D transmissions, minimizing collisions and the associated exploitation of resources available to the radio base station for providing communication in the respective cell, and also speeding up a propagation of the broadcasted message among UE in the target area.

Particularly, one aspect of the present invention proposes a method of broadcasting a message among user equipment in a broadcast area covered by a wireless communication network. The wireless communication network comprises at least one radio base station which is adapted to manage communications of user equipment in one or more respective served areas. The method comprises having the at least one radio base station identify user equipment comprised in the broadcast area; among the user equipment within the broadcast area, estimating a set of transmitter user storing the message to be broadcasted; among the user equipment within the broadcast area, estimating a set of receiver user equipment not storing the message and being able to receive the message sent by at least one transmitter user equipment through a device to device communication, and selecting a subset of transmitter user equipment for transmitting the message ensuring that the receiver user equipment in said set receive the message with a predetermined confidence.

Preferred features of the present invention are set in the dependent claims.

In an embodiment of the present invention, selecting a subset of transmitter user equipment for transmitting the message comprises selecting a minimum number of transmitter user equipment of said set ensuring that the receiver user equipment receive the message with a predetermined confidence.

In an embodiment of the present invention, estimating a set of transmitter user equipment comprised in the broadcast area, estimating a set of receiver user equipment comprised in the broadcast area, and selecting a subset of transmitter user equipment for transmitting the message are based on a probabilistic criterion.

In an embodiment of the present invention, estimating a set of transmitter user equipment comprised in the broadcast area comprises estimating a user equipment within the broadcast area being a transmitter user equipment if a probability that said user equipment stores the message equals or exceeds a predetermined threshold.

In an embodiment of the present invention, estimating a set of receiver user equipment comprised in the broadcast area comprises estimating a user equipment within the broadcast area being a receiver user equipment if a probability that said user equipment receives the message through a device to device transmission equals or exceeds a further predetermined threshold.

In an embodiment of the present invention, the predetermined threshold corresponds to the further predetermined threshold.

In an embodiment of the present invention, selecting a subset of transmitter user equipment for transmitting the message comprises solving a set cover problem.

In an embodiment of the present invention, the set cover problem is formulated as follows: $min {\sum }_{i ∈ TS} {x}_{i} ,$ *such that* $1 - {\prod }_{i ∈ TS} \left(1-{P}_{i}⋅{P}_{i , j}⋅{x}_{i}\right) \geq {α}_{TH} ∀ j ∈ RS$ ${x}_{i} ∈ \left\{0, 1\right\} ∀ i ∈ TS ,$ where *xᵢ* is a binary variable that is set to one if a corresponding transmitter user equipment is selected for the subset of transmitter user equipment for transmitting the message, and is set to zero otherwise, *Pᵢ* is the probability that the transmitter user equipment stores the message, *P_{i,j}* is a probability that a transmission from the transmitter user equipment is correctly received and decoded by a receiver user equipment, *RS* is a set comprising the receiver user equipment, *TS* is a set comprising the transmitter user equipment, and *α_{TH}* is the predetermined threshold.

In an embodiment of the present invention, the set cover problem is formulated as follows: $min {\sum }_{i ∈ TS} {x}_{i} ,$ *such that* ${\sum }_{i ∈ TS} {x}_{i} log \left(1-{P}_{i}⋅{P}_{i , j}\right) \leq log \left(1-{α}_{TH}\right) ∀ j ∈ RS$ ${x}_{i} ∈ \left\{0, 1\right\} ∀ i ∈ TS ,$ where *xᵢ* is a binary variable that is set to one if a corresponding transmitter user equipment is selected for the subset of transmitter user equipment for transmitting the message, and is set to zero otherwise, *Pᵢ* is the probability that the transmitter user equipment stores the message, *P_{i,j}* is a probability that a transmission from the transmitter user equipment is correctly received and decoded by a receiver user equipment, *RS* is a set comprising the receiver user equipment, *TS* is a set comprising the transmitter user equipment, and *α_{TH}* is the predetermined threshold.

In an embodiment of the present invention, the predetermined threshold is a configurable threshold whose value is associated with a reliability of the broadcast.

In an embodiment of the present invention, the predetermined threshold is equal to, or greater than, 0.8.

In an embodiment of the present invention, the predetermined threshold is equal to 0.9 or 0.95.

In an embodiment of the present invention, the method further comprises allocating network resources for the transmission of the message to selected transmitter user equipment. Preferably, said allocating network resources comprises allocating a portion of network resources, available for communications from user equipment towards the radio base station, to selected transmitter user equipment for performing a device-to-device communication.

In an embodiment of the present invention, allocating network resources further comprises exploiting frequency reuse in order to allocating a same network resource to two or more selected transmitter user equipment.

In an embodiment of the present invention, allocating network resources further comprises assessing whether a reduction in the probability of receiving the message through a device to device transmission occurs for any receiver user equipment due to interference provoked by exploiting frequency reuse for two or more selected transmitter user equipment. Moreover, allocating network resources further comprises cancelling the frequency reuse whether the probability drops below the further predetermined threshold for any receiver user equipment.

An embodiment of the present invention further comprises assessing anew the probability of storing the message for each user equipment comprised in the broadcast area after network resources have been allocated to the selected transmitter user equipment.

In an embodiment of the present invention, the method further comprises reiterating the following steps: estimating a set of transmitter user equipment comprised in the broadcast area; estimating a set of receiver user equipment comprised in the broadcast area; selecting a subset of transmitter user equipment for transmitting the message, and assessing anew a probability of storing the message for each user equipment comprised in the broadcast area.

In an embodiment of the present invention, estimating a set of transmitter user equipment comprised in the broadcast area; estimating a set of receiver user equipment comprised in the broadcast area; selecting a subset of transmitter user equipment for transmitting the message, and assessing anew a probability of storing the message for each user equipment comprised in the broadcast area are reiterated while for at least one user equipment comprised in the broadcast area the newly assessed probability of storing the message is lower than the predetermined threshold.

In an embodiment of the present invention, assessing anew a probability of storing the message for each user equipment comprised in the broadcast area comprises estimating that the probability that a user equipment comprised in the broadcast area store the message is equal to the corresponding probability that said user equipment receives the message through a device to device transmission previously assessed.

In an embodiment of the present invention, the method further comprises receiving the message from a core network of the wireless communication network.

In an embodiment of the present invention, the method further comprises allocating network resources to at least one selected transmitter user equipment for transmitting the message to the radio base station.

In an embodiment of the present invention, the method further comprises identifying the broadcast area based on information contained in the message.

In an embodiment of the present invention, the method further comprises providing the message to at least one further radio base station through an interface arranged for communication between radio base stations, the served area of the further radio base station being at least partially superimposed to the broadcast area.

In an embodiment of the present invention, the method further comprises having the radio base station or the at least one further radio base station providing the message to at least one user equipment located within the broadcast area.

In an embodiment of the present invention, providing the message to at least one user equipment comprises providing the message to at least one user equipment having the minimum maximum shortest path with respect to other user equipment within the broadcast area.

In an embodiment of the present invention, the method further comprises receiving a Random Access Channel request from a user equipment in the served area for transmitting the message through a device to device transmission.

In an embodiment of the present invention, further comprising receiving a Buffer Status Report requesting a grant of network resources sufficient to transmit the message.

Another aspect of the solution according to the present invention refers to a wireless communication network comprising at least one radio base station which is adapted to manage communications of user equipment in one or more respective served areas, the least one radio base station being configured for implementing the method of above.

### Brief Description of the Drawings

These and others features and advantages of the solution according to embodiments of the present invention will be better understood by reading the following detailed description of an embodiment thereof, provided merely by way of non-limitative example, to be read in conjunction with the attached drawings, wherein:
**Figure 1A-1C** are schematic representations of a portion of a wireless communication network in which a D2D-based messages broadcast according to an embodiment of the present invention is implemented;
**Figure 2** is a schematic flowchart of a broadcast procedure for managing the D2D-based message broadcast according to an embodiment of the invention;
**Figure 3** is a schematic diagram illustrating frequency reuse during network resources scheduling according to an embodiment of the invention;
**Figure 4A** is a schematic diagram a portion of a wireless communication network in which a D2D-based messages broadcast according to an embodiment of the present invention is implemented over two cells of the wireless communication network;
**Figure 4B** is a schematic diagram a portion of a wireless communication network in which a D2D-based messages broadcast according to an alternative embodiment of the present invention is implemented over two cells of the wireless communication network;
**Figure 5** is a schematic diagram a portion of a wireless communication network in which a D2D-based messages broadcast according to an embodiment of the present invention is implemented over five cells of the wireless communication network, and
**Figures 6A - 6C** are plots of figures of merit of the D2D-based messages broadcast according to an embodiment of the present invention and known expedients based on a simulation of a test scenario.

### Detailed Description of the Invention

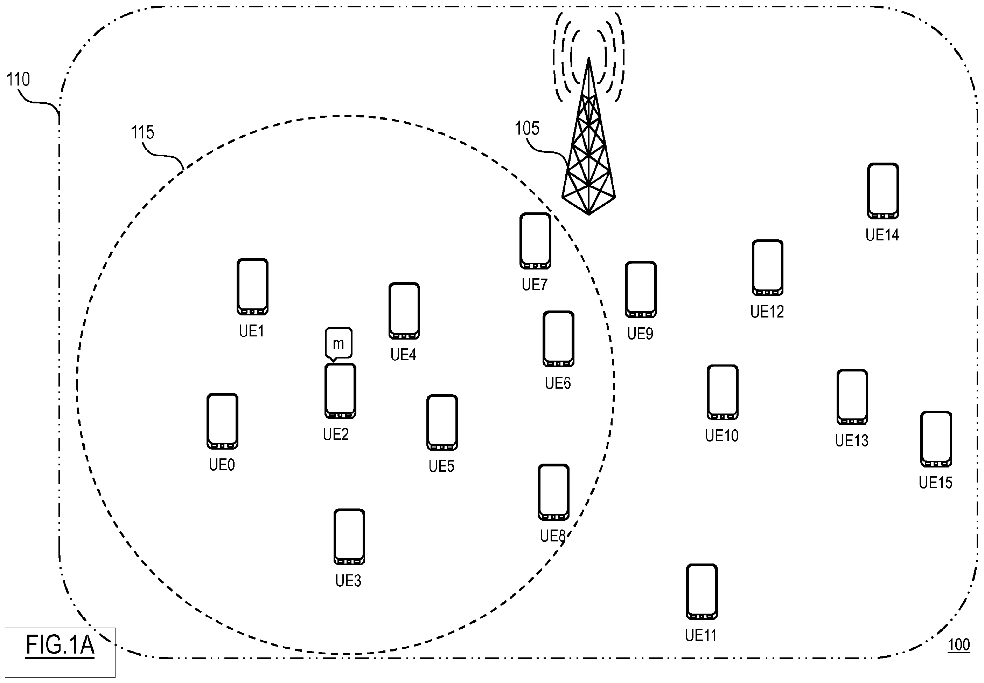

With reference to the drawings, **Figures 1A -1C** are schematic representations of a portion of a wireless communication network **100** in which a device-to-device based, or D2D-based, messages broadcast according to an embodiment of the present invention is implemented.

The portion of the wireless communication network **100** comprises a radio base station, or RBS, **105** (e.g., evolved node B, or eNB, in the Long Term Evolution, LTE, and Long Term Evolution - Advance. LTE-A radio communication technologies), which manages communications over a respective served geographic area, or cell **110.**

In detail, the radio base station **105** is arranged for providing communication services (transmission and reception of voice calls, data packets, *etc*.) to user equipment, such as the user equipment **UE₀₋₁₅** (e.g., smartphones, tablets, laptops, *etc*.), comprised in the cell **110.**

According to an embodiment of the invention, the radio base station **105** is configured for managing a D2D-based messages broadcast according to embodiments of the present invention.

In the following it is assumed that the radio base station **105** has the capability of estimating a position of each user equipment **UE₀₋₁₅** comprised in the cell **110** served by the radio base station **105.** For example, the radio base station may implement one or more of any UE positioning functions known in the art in order to estimate a geographic position of each one of the user equipment **UE₀₋₁₅** within the cell **110.**

In a non-limiting embodiment of the invention, the wireless communication network **100** implements LTE/LTE-A technology configured for managing device-to-device communications (e.g., LTE release 12 and LTE-A release 12) among user equipment capable of performing direct communications one with the other.

In the example illustrated in **Figures 1A - 1C****,** it is considered the case in which, initially, a message m to be broadcasted - denoted by a balloon containing a **m** in the **Figures 1A - 1C** - is generated by a user equipment, such as the user equipment **UE₂** in **Figure 1A****,** for example for warning people in the surrounding that a car accident has occurred.

In order to initiate the broadcast of the message **m,** the user equipment **UE₂** requests to the radio base station **105** network resources needed to perform the broadcast.

The user equipment **UE₂** sends a Random Access, or RAC, request to the radio base station **105.**

Preferably, the user equipment **UE₂** further sends a Buffer Status Report, or BSR, to the radio base station **105** in order to ask for a grant of network resources sufficient to transmit the message **m.**

Particularly, the network resources are requested for implementing one or more D2D transmissions of the message **m** to be broadcasted. In other words, the user equipment **UE₂** requests a grant for a sidelink, SL, for transmitting the message to be broadcasted directly to one or more of the user equipment **UE₀₋₁₅** comprised within the cell **110.**

The radio base station **105,** by analyzing the BSR received from the user equipment **UE₂**, may recognize that the user equipment **UE₂** is requesting a grant for a sidelink SL in order to initiate a D2D-based messages broadcast. For example, an indication that the user equipment **UE₂** is willing to initiate the D2D-based messages broadcast may be contained in a specific value of the Logical Connection ID, or LCID, field of the BSR (i.e., the BSR does not necessarily requires changes in order to implement the D2D-based messages broadcast according to embodiments of the present invention).

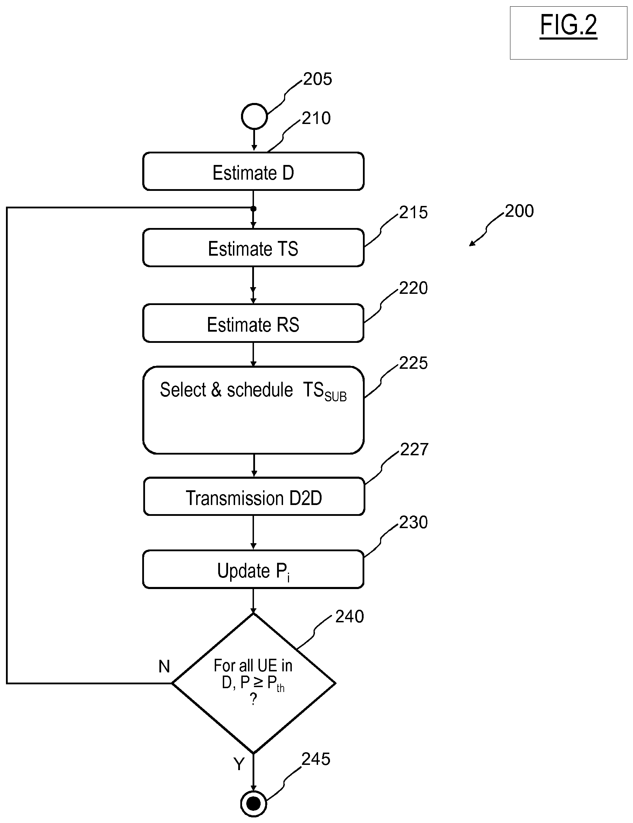

Once the radio base station **105** identifies that the user equipment **UE₂** is requesting resources for D2D-based messages broadcasting, the radio base station **105** may instantiate a D2D-based broadcast managing procedure, broadcast procedure **200** for short in the following, according to an embodiment of the present invention, which is now described by further making reference to **Figure 2****,** which is a schematic flowchart thereof.

As noted above, the broadcast procedure **200** is initiated (start block **205)** at a radio base station, such as the radio base station **105** in the example of **Figures 1A-1C****,** by identifying a request for grant of a sidelink SL made by a user equipment, such as the user equipment **UE₂**, in order to initiate a D2D-based messages broadcasting.

Firstly, the radio base station determines (block **210)** a set *D* of the user equipment **UE₀₋₈** comprised in the cell **110** that are also comprised within a broadcast area **115** (delimited by a dashed circle in **Figures 1A-****1C)** of the broadcast.

The broadcast area **115** is an area within which the message **m** is to be broadcasted. In other words, the message **m** has to be received by each user equipment, such as the user equipment **UE₀**, **UE₁** and UE_{3-**8**} in the example at issue, comprised within the broadcast area **115.**

In an embodiment of the invention, the broadcast area **115** may be substantially discoidal and a broadcast radius *r_{b}* may be associated with the message **m** to be broadcasted. In this case, the broadcast radius *r_{b}* is used for determining an extent of the broadcast area **115.**

Preferably, the broadcast area **115** is centered on the source of the broadcasted message **m,** i.e. the user equipment **UE₂** in the example at issue.

Even more preferably, a length of the broadcast radius *r_{b}* and/or an extent of the broadcast area **115,** may be a predefined parameter or may be defined by the user equipment **UE₂** that generate the message **m** (as described in the following).

Nonetheless, nothing prevents from defining the broadcast area **115** according to different criteria and/or having different shapes without departing from the scope of the invention.

In the example of **Figures 1A-1C****,** the user equipment **UE₀₋₈** are comprised in the broadcast area **115** and therefore in the UE set *D* identified by the radio base station **105,** i.e.:$D = \left\{U{E}_{0}, U{E}_{1}, U{E}_{2}, U{E}_{3},U{E}_{4}, U{E}_{5}, U{E}_{6}, U{E}_{7}, U{E}_{8}\right\} .$

Then, the radio base station **105** identifies (block **215)** a (possible) transmitters' set *TS* of user equipment **UE₀₋₈** that currently (i.e., during the considered iteration of the broadcast procedure **200)** store the message **m** to be broadcasted.

It should be noted that, in a first iteration of the broadcast procedure **200,** only the user equipment that has generated the message **m,** such as the user equipment **UE₂** in the example of **Figures 1A-1C****,** stores the message **m** to be broadcasted (i.e., at the first iteration *TS* = {**UE₂**}) with a storing probability *Pᵢ*, i.e. a probability that the **UEᵢ** (where i = 0,..., 8, in the example of **Figures 1A-1C****)** stores the message **m,** equal to unity (i.e., *Pᵢ* = 1).

In successive iterations of the broadcast procedure **200,** the radio base station **105** identifies the user equipment **UE₀₋₈** belonging to the transmitters set *TS* (i.e., currently storing the message **m)** based on a probabilistic criterion. For example, a generic user equipment **UEᵢ** is inserted in the transmitters set *TS* whether the storing probability *Pᵢ* equals or exceeds a reliability threshold *α_{TH}* (i.e., *Pᵢ* ≥ *α_{TH}*; as described in the following).

Preferably, the reliability threshold *α_{TH}* is a configurable threshold whose value is associated with a reliability of the broadcast, for example typical values may be set equal to, or greater than, 0.8 (i.e., *α_{TH}*≥ 0.8) such as preferably *α_{TH} = 0.9* or *α_{TH}* = 0.95.

After defining the set *TS,* the radio base station **105** defines a (possible) receivers' set *RS* (block **220)** comprising receiver user equipment **UEⱼ** (where j = 0,..., 8, and j ≠ 2 in the example of **Figures 1A-1C****)** comprised in the broadcast area **115** that are likely to receive the broadcast message **m** transmitted by the user equipment **UEᵢ** of the transmitters set *TS* based on the aforementioned probabilistic criterion. Preferably, a (message) reception probability *Pⱼ*, i.e. a probability that the **UEⱼ** receives the message **m** by means of a D2D transmission thereof, is computed (as described in the following). Accordingly, the generic user equipment **UEⱼ** is inserted in the receivers set *RS* in case the reception probability *Pⱼ* equals or exceeds the reliability threshold *α_{TH}* (i.e., *Pⱼ* ≥ *α_{TH}*; as described in the following).

Accordingly, the radio base station **105** selects and schedules (block **225)** a broadcast subset *TS_{SUB}* of of user equipment **UEᵢ** comprised in the transmitters set *TS,* to which transmission grants are provided by the radio base station **105** in order to propagate the message **m** (as described in the following).

Preferably, during each iteration of the broadcast procedure **200,** the broadcast subset *TS_{SUB}* is selected and scheduled in such a way to minimize an overall number of transmissions of the message **m** during the D2D-based broadcast thereof, and, at the same time, to ensure that the message **m** is received by the user equipment **UEⱼ** comprised in the receivers set *RS* with the reception probability *Pⱼ* equaling or exceeding the reliability threshold *α_{TH}* (i.e., *Pⱼ* ≥ *α_{TH}*; as described in the following).

Advantageously, the user equipment **UEᵢ** comprised in the broadcast subsets *TS_{SUB}* are also selected in such a way to minimize network resources to be allocated for performing the D2D-based messages broadcast (as described in the following). For example, in an embodiment of the invention, frequency reuse may be implemented in order to reduce an amount of network (transmission) resources allocated for broadcasting the message **m** (as described in the following).

Once the user equipment **UEᵢ** in the broadcast subset *TS_{SUB}* have transmitted (block **227)** the message **m,** the storing probability *Pᵢ* that each user equipment **UE₀₋₈** in the broadcast area **115** store the message **m is** newly assessed (block **230).**

For example, user equipment **EUⱼ** of the receivers set *RS* that, probabilistically, are likely to have just received the message **m** are regarded as now storing the message **m** with a storing probability *Pᵢ* equal to the receipt probability *Pⱼ* (i.e., *Pᵢ = Pⱼ* ≥ *α_{TH}*)*.*

Then, the radio base station **105** assesses (decision block **240)** for all the user equipment **UE₀₋₈** in the broadcast area **115,** i.e. the user equipment **UE₀₋₈** comprised in the UE set *D,* whether the corresponding storing probability *Pᵢ* is equal to or greater than the reliability threshold *α_{TH}.* In other words, the radio base station **105** estimates whether all the user equipment **UE₀₋₈** comprised in the UE set *D* store (i.e. have received) the message **m.**

In the affirmative case (exit branch **Y** of decision block **240),** i.e. the broadcast of the message **m** has reached all the user equipment **UE₀₋₈** comprised in the broadcast area **115,** the broadcast procedure **200** ends (block **245).**

In the negative case (exit branch **N** of decision block **240),** i.e. the broadcast of the message **m** has not reached all the user equipment **UE₀₋₈** comprised in the broadcast area **115,** operation returns at block **215,** in order to start a new iteration of the broadcast procedure **200** - i.e., the new iteration entails repeating the operations of blocks **215, 220, 225, 227, 230, 240.**

According to an embodiment of the present invention, the broadcast procedure **200** is iterated until the broadcast of the message **m** has reached all the user equipment **UE₀₋₈** comprised in the broadcast area **115.**

It should be noted that each (D2D) transmission of the message m requires four (4) Transmission Time Intervals (TTls, known in the art and not herein discussed for the sake of brevity) to be decoded by the user equipment **UEⱼ** in the receivers set *RS.* Accordingly, each iteration of the broadcast procedure **200** follows a previous iteration after four TTls and precedes a next iteration by four TTIs.

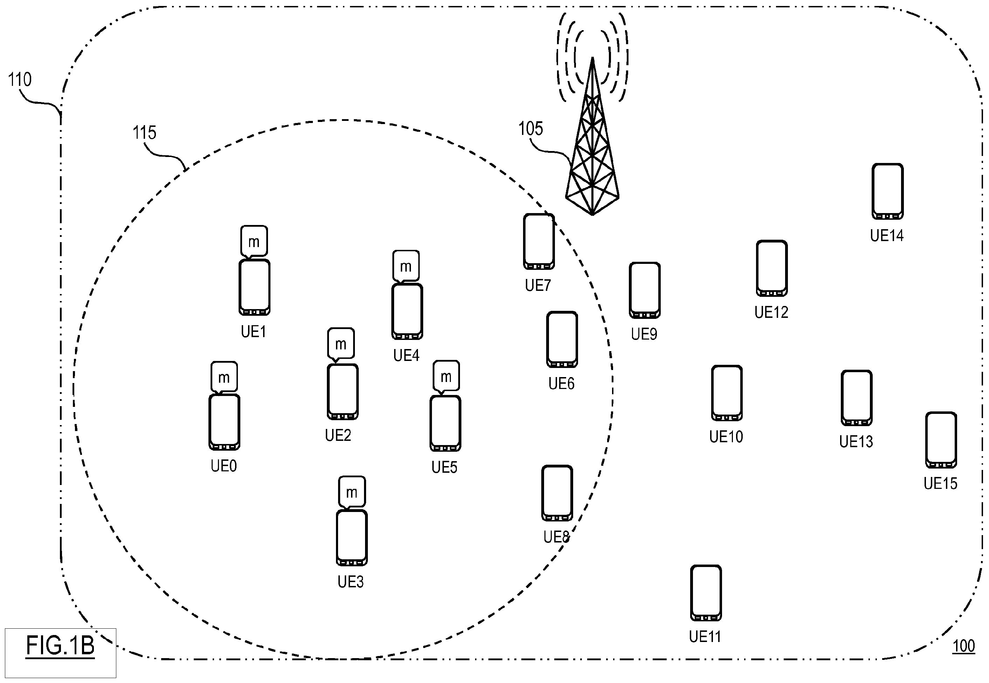

With reference to the example of **Figures 1A** and **1B** the broadcast procedure **200** manages the D2D-based broadcast in the broadcast area **115** of the message **m** in the following manner.

The radio base station **105,** upon receiving a grant request for network resources on a sidelink SL from the user equipment **UE₂** for performing a D2D-based message broadcast, populates the UE set *D* with the user equipment **UE₀₋₈** comprised in the broadcast area **115,** as noted above.

As it should be clear, in the example at issue only the user equipment **UE₂** (which generates the message **m)** initially stores the message **m** to be broadcasted with a storing probability *P₂* equal to one (*P₂* = 1). Accordingly, only the user equipment **UE₂** is inserted in the transmitters set *TS* by the radio base station **105** (i.e., *TS* = {**UE₂**}).

The radio base station **105** then identifies the user equipment **UE₀**, **UE₁**, **UE₃**, **UE₄** and **UE₅** as able to receive the message **m** with a reception probability *Pⱼ* equaling or exceeding the reliability threshold *α_{TH}*; thus, the user equipment **UE₀**, **UE₁**, **UE₃**, **UE₄** and **UE₅** are comprised in the receivers set *RS* (i.e., *RS* = {**UE₀, UE₁**, **UE₃**, **UE₄, UE₅}).**

Since the transmitters set *TS* only comprises the user equipment **UE₂**, in such a first iteration of the broadcast procedure **200** only the user equipment **UE₂** is inserted in the broadcast subsets *TS_{SUB}* (i.e., *TS_{SUB}* = {**UE₂}**).

The user equipment **UE₂** receives a grant of transmission on the sidelink SL by the radio base station **105,** and performs a D2D transmission of the message **m.**

The user equipment **UE₀**, **UE₁**, **UE₃**, **UE₄** and **UE₅** in the receivers set *RS* are considered having received the message **m** (each with a respective confidence corresponding the respective reception probability *Pⱼ*) as shown in **Figure 1B****.** Therefore, each user equipment **UE₀**, **UE₁**, **UE₃**, **UE₄** and **UE₅** is (from now) considered to store the message **m** with a respective storing probability *Pᵢ* substantially equal to the reception probability *Pⱼ* (i.e., *Pᵢ = Pⱼ* ≥ *α_{TH}*)*.*

Since the user equipment **UE₆**, **UE₇** and **UE₈** in the broadcast area **115** have not received the message **m** yet, the broadcast procedure **200** is reiterated (i.e., the operations of blocks **215, 220, 225, 227, 230, 240** are repeated).

In the new iteration, the radio base station **105** inserts in the transmitters set *TS* all the user equipment **EUᵢ** that are deemed to store the message **m** with a storing probability *Pᵢ* equaling or exceeding the reliability threshold *α_{TH}.* In the example at issue, the user equipment **UE₀**, **UE₁**, **UE₃**, **UE₄** and **UE₅** (which received the message **m** in the previous iteration of the broadcast procedure **200)** and the user equipment **UE₂** (which generated the message **m)** comply with such constrain (i.e., *Pᵢ* ≥ *α_{TH}*), and are accordingly comprised in the transmitters set *TS* (i.e., *RS* = {**UE₀, UE₁**, **UE₂**, **UE₃**, **UE₄, UE₅**}).

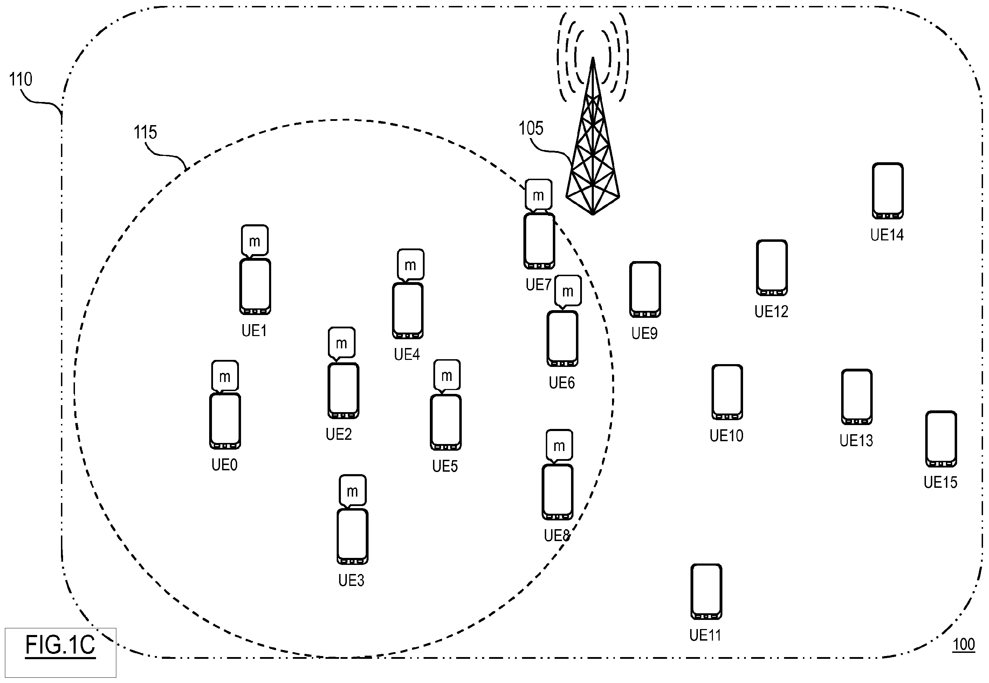

Afterwards, a new receivers set *RS* is identified. In the example of **Figures 1****B** and **1C,** all the three remaining user equipment **UE₆**, **UE₇** and **UE₈** not already storing the message **m** result being able to receive the message **m** with a reception probability *Pⱼ* equaling or exceeding the reliability threshold *α_{TH}* (i.e., *Pⱼ* ≥ *α_{TH}*) and are thus comprised in the receivers set *RS* (i.e., *RS* = {**UE₆, UE₇**, **UE₈**}).

The radio base station **105** selects (as described in the following) which user equipment **UEᵢ** to schedule for transmitting the message m by means of D2D transmission and grants them network resources (e.g., one or more resource blocks) in the SL. In the example of **Figures 1B** and **1C****,** the radio base station **105** determines that is possible to provide the message **m** to the user equipment **UE₆**, **UE₇** and **UE₈** in the receivers set *RS* (with the desired confidence, i.e. *Pⱼ* ≥ *α_{TH}*) by granting transmission only to the user equipment **UE₄** and **UE₅** in the transmitters set TS. Accordingly, the user equipment **UE₄** and **UE₅** are inserted in the broadcast subset *TS_{SUB}* (i.e., *TS_{SUB}* = {**UE₄**, **UE₅**}).

The user equipment **UE₄** and **UE₅** receive a grant of transmission on the sidelink SL by the radio base station **105,** and perform a D2D transmission of the message **m.**

The user equipment **UE₆**, **UE₇** and **UE₈** in the receivers set RS are considered having received the message **m** (each with a respective confidence corresponding to the respective reception probability *Pⱼ*) as shown in **Figure 1C****.** Therefore, each user equipment **UE₆**, **UE₇** and **UE₈** is (from now on) considered to store the message **m** with a respective storing probability *Pᵢ* equal to the receipt probability *Pⱼ* (i.e., *Pᵢ = Pⱼ* ≥ *α_{TH}*)*.*

As **Figure 1C** shows, all the user equipment **UE₀₋₈** in the broadcast area **115** (i.e., the user equipment **UE₀₋₈** comprised in the UE set *D*) are now considered to store the message **m.** In other words, all the user equipment **UE₀₋₈** in the broadcast area **115** have received the message **m** and the broadcast is completed (i.e., the broadcast procedure **200** terminates).

According to an embodiment of the present invention, the selection and scheduling of user equipment **UEᵢ** for D2D transmission (i.e., the selection user equipment **UEᵢ** to be comprised in the broadcast subset *TS_{SUB}*; see block **225** of the broadcast procedure **200)** may be performed as follows.

Preferably, a selection and scheduling sub-broadcast procedure may be implemented. Even more preferably, the selection and scheduling sub-broadcast procedure comprises two (2) phases, namely a (first) selection phase and a (second) scheduling phase.

The selection phase of the selection and scheduling sub-broadcast procedure is configured to select a (minimum) broadcast subset *TS_{SUB}* of user equipment **UEᵢ** comprised in the transmitter set *TS* whose D2D transmissions of the message **m** (probably) reaches all the user equipment **UEⱼ** in the receivers set *RS*

Thanks to the knowledge of the position of all user equipment **UE₀₋₁₅** in the cell **110,** the radio base station **105** may estimate the signal attenuation due to path loss between couples of (transmitter) user equipment **UEᵢ** and (receiver) user equipment **UEⱼ** in the broadcast area.

Based on the estimate of signal attenuation between couples of user equipment **UEᵢ** and **UEⱼ** and by exploiting BLock Error Rate, or BLER, curves used for selecting a Modulation and Coding Scheme, or MCS, for transmissions, the radio base station **105** computes for each pair of user equipment **UEᵢ** and **UEⱼ** comprised in the broadcast area **115** a reception (successful receipt of message) probability *P_{i,j}*, i.e. a probability that a transmission (e.g., the transmission of the message m to be broadcasted) from the transmitter user equipment **UEᵢ** is correctly received and decoded by the receiver user equipment **UEⱼ**.

The reception probability *Pⱼ* for a generic user equipment **UEⱼ** in the receivers set *RS* may be computed as the joint probability of receiving the message from a user equipment **UEᵢ** storing the message **m,** or ${P}_{j} = 1 - {\prod }_{i ∈ TS} \left(1-{P}_{i}⋅{P}_{i , j}⋅{x}_{i}\right) ,$ where *xᵢ* is a binary variable that is set to one (1) if user equipment **UEᵢ** is selected for transmission (i.e., is comprised in the broadcast subset *TS_{SUB}*), and is set to zero (0) otherwise.

The above equation (1) expresses a probabilistic variant of a set cover problem, also indicated simply as 'problem' in the following, with constraints on an amount of available resources.

Solving the set cover problem is NP-hard (Non-deterministic Polynomial-time hard, i.e. a class of problems complexity known in the art and not herein further discussed for the sake of brevity) and requires a huge number of variables for its completion. For example, in a scenario comprising 40 user equipment having available 50 resource blocks on the sidelink SL for D2D transmissions, a number of binary variables required for solving the set cover problem substantially corresponds to 40 × 50 = 2000 (i.e., 2000 binary variables for indicating which user equipment is transmitting in which corresponding resource block), and further 40 × 40 × 50 = 80000 binary variables are required for indicating whether two (or more) generic user equipment are exploiting a same resource block for transmission.

Based on equation (1) it is possible to identify a (minimum) broadcast subset *TS_{SUB}* of user equipment **UEᵢ** in the transmitter set *TS* whose D2D transmissions of the message **m** (probably) reaches all the user equipment **UEⱼ** in the receivers set *RS.*

In fact, given the transmitters set *TS* of user equipment **UEᵢ** that (probably) store the message m it is to be identified the broadcast subset *TS_{SUB}* of user equipment **UEᵢ** in the transmitter set *TS* whose D2D transmissions of the message **m** (probably) allows reaching all the user equipment **UEⱼ** in the receivers set *RS* and allocating network resources to such user equipment **UEᵢ** in the broadcast subset *TS_{SUB}* for transmitting the message m (operation performed at block **225** in the flowchart of **Figure 2****).** The allocation of network resources preferably comprises optimizing the usage thereof, for example by implementing frequency reuse (hence, posing interference constraints to the solution) and exploiting a limited number of network resources (e.g., resource blocks).

The selection phase of the selection and scheduling sub-broadcast procedure entails solving the probabilistic set cover problem, assuming infinite network resources and without implementing frequency reuse. Under such assumptions, the solution to the set cover problem is accelerated and simplified.

Particularly, the set cover problem may be formulated as follows: $min {\sum }_{i ∈ TS} {x}_{i} ,$ *such that* $1 - {\prod }_{i ∈ TS} \left(1-{P}_{i}⋅{P}_{i , j}⋅{x}_{i}\right) \geq {α}_{TH} ∀ j ∈ RS$ ${x}_{i} ∈ \left\{0, 1\right\} ∀ i ∈ TS$ The problem may be linearized by reformulating inequality (3):$min {\sum }_{i ∈ TS} {x}_{i} ,$ *such that* $\begin{matrix}{\sum }_{i ∈ TS} {x}_{i} log \left(1-{P}_{i}⋅{P}_{i , j}\right) \leq log \left(1-{α}_{TH}\right) ∀ j ∈ RS \\ {x}_{i} ∈ \left\{0, 1\right\} ∀ i ∈ TS .\end{matrix}$

The solution of the set cover problem identifies the user equipment **UEᵢ** to be comprised in the broadcast subset *TS_{SUB}.*

It should be noted that the user equipment **UEᵢ** identified by solving the set cover problem according to inequality (3) and/or inequality (5) ensure that the reception probability *Pⱼ* for each user equipment **UEⱼ** of the receiver set RS equals or exceeds the reliability threshold *α_{TH}* as required.

It should be noted that, since all the user equipment **UEᵢ** of the broadcast subset *TS_{SUB}* transmit the same message **m** with the same modulation coding scheme, the same amount of network resources (e.g., one resource block) is allocated to each user equipment **UEᵢ** of the broadcast subset *TS_{SUB}.*

Due to the assumption made above (i.e., infinite network resources and no frequency reuse), it is likely that the required network resources to be allocated for the transmission of the message m by the user equipment **UEᵢ** comprised in the broadcast subset *TS_{SUB}* exceed the currently available network resources (i.e., network resources in the uplink, UL, which may be exploited for establishing a sidelink; SL, for D2D communication as known).

An example of selection and scheduling sub-broadcast procedure according to an embodiment of the present invention is herein provided in the form of the following pseudo-code, in which it is assumed that each user equipment **UEᵢ** of the broadcast subset *TS_{SUB}* is scheduled in one resource block, RB, without loss of generality. Moreover, in the pseudocode:
- U is the set of schedulable user equipment **UEᵢ** (i.e., the broadcast subset *TS_{SUB}*);
- rbAlloc is a matrix, or map, that stores, for each resource block *RBₖ* (wherein k is a positive integer), the user equipment **UEᵢ** allocated on it.
- ueAlloc is a vector that stores, for each user equipment **UEᵢ**, the *RBₖ* allocated to it.

It should be noted that, in the following pseudo-code according to an embodiment of the invention, a simplified scheduling phase is implemented. The simplified scheduling phase is configured to discard the scheduling of user equipment **UEᵢ** of the broadcast subset *TS_{SUB}* for which resource blocks are not effectively available. In other words, in case the number of **UEᵢ** is greater than a number *K* (*K* > 0) of effectively available resource blocks *RBₖ,* the user equipment **UEᵢ** allocated in any *RBₖ,* with *k > K* (e.g., *k* = *K* + 1) are not scheduled by the radio base station **105.** In other words, the algorithm described by the pseudo-code does not comprise optimization of network resources exploitation, even though implementing a frequency reuse criteria. Indeed, the algorithm described by the pseudo-code allocates user equipment **UEᵢ** in a generic *RBₖ* by means of one or more trials, e.g. according to a 'greedy' criterion, without ensuring that the final allocation is an optimal solution with respect to one or more selected constraint and/or metrics.

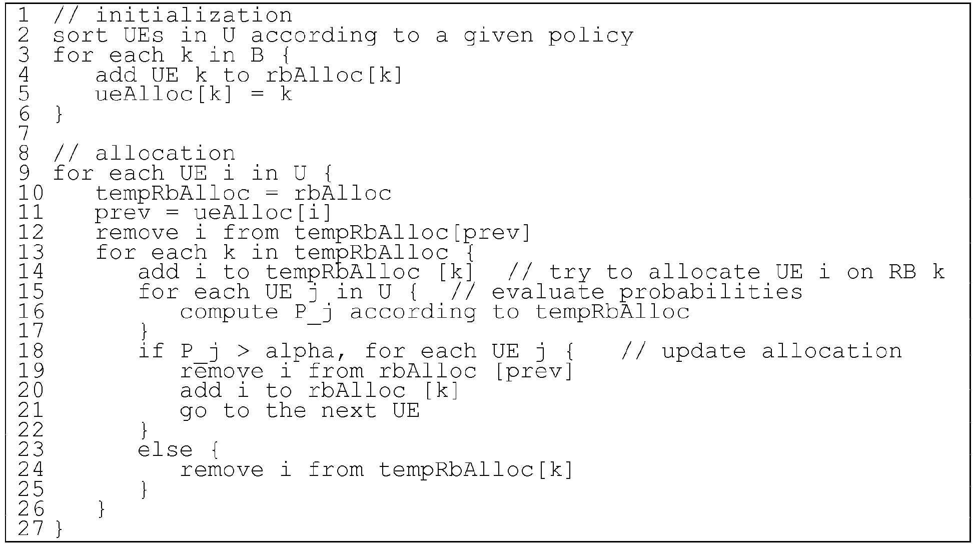

The selection and scheduling sub-broadcast procedure according to preferred embodiments of the present invention comprises a scheduling phase in which one or more optimization techniques, such as for example frequency reuse, are implemented, in order to reduce network resources, e.g. resource blocks, required for the D2D-based broadcast of the message **m** and allowing scheduling a number of **UEᵢ** of the broadcast subset *TS_{SUB}* greater than network resources, e.g. a number of resource blocks, effectively available.

Preferably, the radio base station **105** allocates network resources for the transmission of the message **m** by the user equipment **UEᵢ** of the broadcast subset *TS_{SUB}* using a heuristic scheduling algorithm.

Preferably, in a first portion of the heuristic scheduling algorithm, the available network resources are firstly assigned to the user equipment **UEᵢ** of the broadcast subset *TS_{SUB}* in a mutual exclusive manner (i.e., respective network resources are allocated to each user equipment **UEᵢ** of the broadcast subset *TS_{SUB}*)*.*

Afterwards, in a second portion of the heuristic scheduling algorithm, frequency reuse is implemented by allocating corresponding network resources to two or more user equipment **UEᵢ** of the broadcast subset *TS_{SUB}.* In other words, the transmission of the message **m** by two or more user equipment **UEᵢ** of the broadcast subset *TS_{SUB}* may be scheduled on the same network resources.

Preferably, upon applying frequency reuse the radio base station **105** checks whether the message probability *P_{i,j}* and, accordingly, the reception probability *Pⱼ* change due to interference associated with the frequency reuse. Even more preferably, the radio base station **105** checks whether the reception probability *Pⱼ* remains equal to, or greater than, the reliability threshold *α_{TH}* (*Pⱼ* ≥ *α_{TH}*)*.* In the affirmative case (i.e. the reception probability *Pⱼ* remains equal to, or greater than, the reliability threshold *α_{TH}*), the frequency reuse is enforced. Otherwise (i.e. the reception probability *Pⱼ* becomes lower than the reliability threshold *α_{TH}*), the frequency reuse is discarded.

In the exemplary D2D-based broadcast scenario of **Figures 1A-1C** according to a non-limiting embodiment of the invention, the selection and scheduling sub-broadcast procedure may be implemented in the following manner. As described above, user equipment **UE₂** is the only user equipment **UEᵢ** in the transmitters set *TS,* while user equipment **UE₀**, **UE₁**, **UE₃**, **UE₄** and **UE₅** are in (D2D communication) reach from **UE₂** and are included in the receivers set *RS.*

A possible solution of the probabilistic set cover problem is a Candidate Active Set, or CAS, i.e. corresponding to the broadcast subset *TS_{SUB}*, containing only user equipment **UE₂**, which is scheduled for transmission by the heuristic scheduling algorithm in available network resources, such as four (4) resource blocks *RB₀₋₃* out of six (6) resource blocks *RB₀₋₅* totally available for transmission on the sidelink.

After the transmission of the message **m,** user equipment **UE₀**, **UE₁**, **UE₃**, **UE₄** and **UE₅** in the receivers set RS have the message **m** with the desired confidence (*Pᵢ* ≥ *α_{TH}*)*.*

During the second iteration of the broadcast procedure **200,** the radio base station **105** instantiates the selection and scheduling sub-procedure (second iteration of block **225)** in the transmitters set *TS* that now comprises user equipment **UE₀₋₅**.

The solution to the set cover problem is performed in the first phase of the selection and scheduling sub-procedure and results in the selection of user equipment **UE₄** and **UE₅** for covering (i.e., providing the message **m** to) the user equipment **UE₆**, **UE₇** and **UE₈** comprised in the receivers set *RS* in such a second iteration of the broadcast procedure **200** (i.e., user equipment **UE₄** and **UE₅** are comprised in the broadcast subset *TS_{SUB}*)*.*

Subsequently the second phase of the selection and scheduling sub-procedure is instantiated for scheduling D2D transmission of user equipment **UE₄** and **UE₅**.

In the first portion of the heuristic scheduling algorithm, user equipment **UE₄** and **UE₅** are scheduled on four resource blocks each, for a total of eight (8) resource blocks allocated, which exceeds the six (6) totally available resource blocks *RB₀₋₆* totally available for transmission on the sidelink .

Accordingly, in the second portion of the heuristic scheduling algorithm, frequency reuse is implemented, for example the user equipment **UE₄** and **UE₅** may be scheduled for transmission in the same four (4) resource blocks *RB₀₋₃,* provided that the reception probability *Pⱼ* for the user equipment **UE₆**, **UE₇** and **UE₈** comprised in the receivers set *RS* is not critically affected by interference associated with the frequency reuse scheme determined by the heuristic scheduling algorithm (i.e., *Pⱼ* does not drop below the reliability threshold *α_{TH}*)*.*

After the transmission of the message **m** in the second iteration, all the user equipment **UE₆**, **UE₇** and **UE₈** comprised in the receivers set *RS* have the message with the desired confidence (*Pᵢ* ≥ *α_{TH}*)*.* Moreover, all the user equipment **UE₀₋₈** in the broadcast area **115** have received the message **m,** and the broadcast procedure **200** terminates.

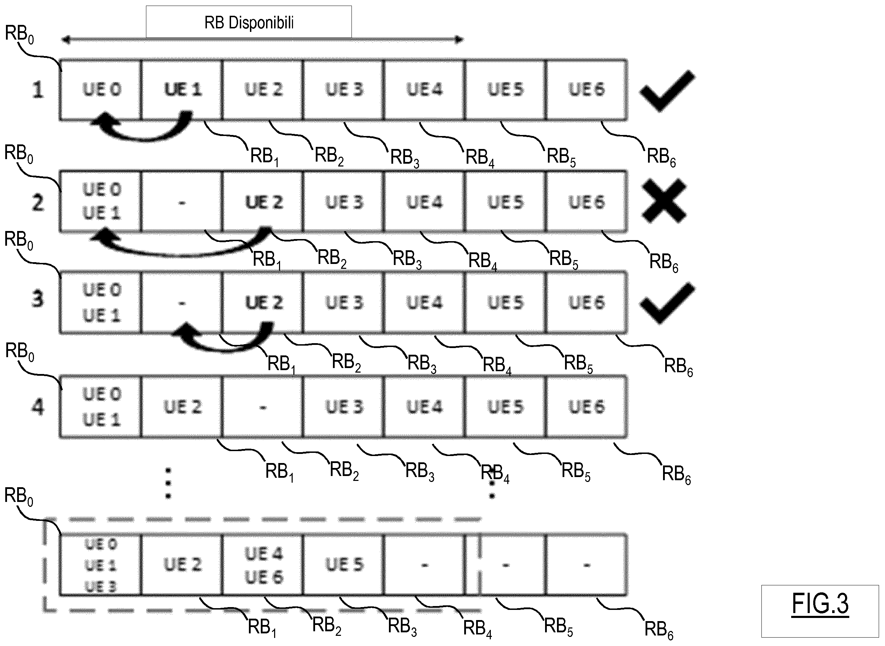

A more general example of frequency reuse according to an embodiment of the invention is shown in **Figure 3****,** which is a schematic diagram illustrating frequency reuse during network resources scheduling according to an embodiment of the invention.

In the example of **Figure 3****,** seven user equipment **UE₀₋₆** are comprised in the broadcast subset *TS_{SUB}.* In the first portion of the heuristic scheduling algorithm, one or more respective network resources, e.g. one respective resource block in the example of **Figure 3****,** are allocated to each user equipment **UE₀₋₆**. This guarantees that interference constraints of the set cover problem are satisfied.

It should be noted that seven (7) resource blocks **RB₀₋₆** are allocated (one for each user equipment **UE₀₋₆**) although only five (5) resource blocks **RB₀₋₄** are effectively available in the example.

Accordingly, frequency reuse is implemented during the second portion of the heuristic scheduling algorithm. In a first iteration of the frequency reuse, user equipment **UE₁** is tentatively scheduled for transmission in resource block **RB₀**, together with user equipment **UE₀**. In this case, transmissions from user equipment **UE₀** and **UE₁** in the same resource block **RB₀** would generate interference (at least in transmissions and/or reception between user equipment **UE₀** and **UE₁**), but the reception probability *Pⱼ* for all the user equipment in the receivers set *RS* is assessed (by a managing radio base station as described above) to remain above the reliability threshold *α_{TH}.* Thus, resource block **RB₀** is also allocated to user equipment **UE₁** for transmission (i.e., frequency reuse is enforced for user equipment **UE₁**).

At a second iteration of the frequency reuse, user equipment **UE₂** is tentatively scheduled for transmission in resource block **RB₀** as well. However, in this case, the cumulative interference would reduce the reception probability *Pⱼ* for at least one user equipment in the receivers set *RS.* Thus, user equipment **UE₂** cannot be scheduled for transmission in resource block **RB₀** (i.e., frequency reuse is not enforced for user equipment **UE₂**). Accordingly, at a third iteration of the frequency reuse, user equipment **UE₂** is tentatively scheduled for transmission in resource block **RB₁**. Since no other user equipment is currently scheduled in resource block **RB₁**, user equipment **UE₂** can be scheduled for transmission in resource block **RB₁**.

The iterations of the frequency reuse continue until all user equipment **UE₀₋₆** in the broadcast subset *TS_{SUB}* have been parsed. In the example at issue at the end of the second phase of the selection and scheduling of user equipment **UEᵢ**, all user equipment **UE₀₋₆** have been scheduled for transmission in the first four resource blocks **RB₀₋₃**, enforcing frequency reuse and maintaining the reception probability *Pⱼ* for all the user equipment in the receivers set *RS* remains above the reliability threshold *α_{TH}.*

The broadcast procedure **200** allows the radio base station **105** to control the broadcasting of the message **m** on the sidelink SL (i.e., a D2D-based broadcast) with the minimum amount of transmissions performed by the user equipment **UE₀₋₈** in the broadcast area **115,** which means reducing the network resources to be allocated for the broadcast and the interference generated within the cell **110** by the broadcast. Moreover, Random Access Channel, or RAC, handshake is required only initially (e.g., during the scheduling request performed by the user equipment **UE₂** that generates the message **m in** the example of **Figures 1A-1C****),** hence reducing occurrence of collisions and latency experienced by communications within the cell **110.**

It should be noted that through the selection of the value of the reliability threshold *α_{TH}* it is possible to control erroneous scheduling of user equipment **UE₀₋₈** that do not store the message **m** (e.g., assessed as a number of user equipment **UE₀₋₈** erroneously scheduled for transmission) and broadcast delay (e.g., assessed as a time required to propagate the message **m in** the whole broadcast area **115).** Indeed, higher values of the reliability threshold *α_{TH}* generally reduce the number of user equipment **UE₀₋₈** erroneously scheduled for transmission, at the cost of additional broadcast transmissions and increasing broadcast delay (in order to have a high confidence that user equipment **UE₀₋₈** scheduled for transmission store the message **m).** Lower values of the reliability threshold *α_{TH}* generally lead the radio base station **105** to identify the transmitters set *TS* comprising a large number of user equipment **UE₀₋₈**, at increased risk of scheduling for transmission user equipment **UE₀₋₈** that not store the message **m.**

In an embodiment of the invention, it is possible to configure the user equipment **UE₂** that originates the message **m** to define a specific broadcast area **115.** For example, the user equipment **UE₂** is configured for communicating an information, e.g. a parameter (e.g., the broadcast radius *r_{b}* mentioned above), allowing to the radio base station **105** to determine the broadcast area **115.**

To this extent, the radio base station **105** may be configured to send also an uplink, UL, scheduling grant in response to a Buffer Status Report, BSR sent by the user equipment **UE₂**, e.g. on the TTI after sending the sidelink SL scheduling grant to the user equipment **UE₂**. Accordingly, the user equipment **UE₂** may perform the first D2D-based broadcast transmission of the message m using the network resources allocated by the sidelink SL scheduling grant and, in addition, the user equipment **UE₂** may send the message m also to the radio base station **105** using the network resources allocated by the uplink UL scheduling grant. The radio base station **105,** in its turn, may configure the broadcast procedure **200** with the information regarding the specific broadcast area **115** contained in the message **m;** thus, allowing the radio base station **105** to correctly identify all the user equipment **UE₀₋₈** comprised in the broadcast area **115** (to be included in the in the UE set *D*) among the user equipment **UE₀₋₈** comprised in the cell **110** served by the radio base station **105.**

It should be noted that the broadcast procedure **200** may be modified for managing the broadcast of a message *m'* generated by a provider of wireless communication network **100** (both manually or automatically, e.g. by a computing arrangement comprised in the wireless communication network **100)** or by a third party (e.g., advertisement companies, law enforcers, emergency operators, *etc*.). In this case, the message *m' is* initially stored at the radio base station. For example, the message is provided to the radio base station through a core network (not shown) of the wireless communication network.

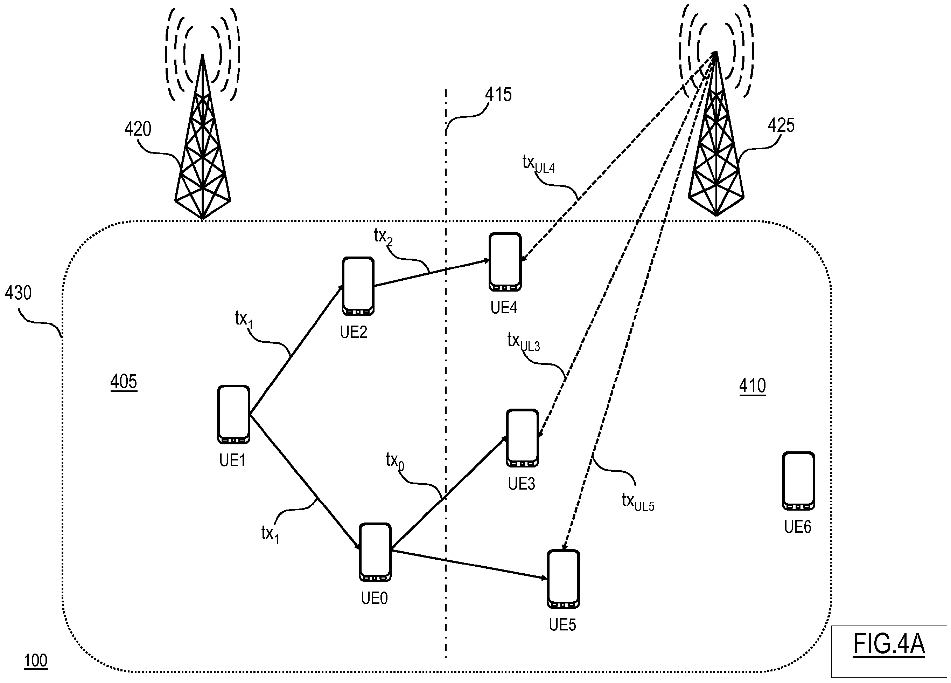

Therefore, the radio base station selects one or more user equipment within its cell and the broadcast area to which send the message *m'* together with a scheduling grant on the sidelink SL for transmitting the message *m'.* Preferably, the radio base station **425,** in **Figure 4A****,** may select which user equipment **UE₃₋₆** provide with the message m according to a configurable policy.

Preferably, the radio base station may select as first receiver of the message *m'* the user equipment having the minimum maximum shortest path with respect to other user equipment within the broadcast area. In other words, the first receiver of the message *m*' is selected as the user equipment within the broadcast area (or portion of broadcast area superimposed to the cell served by the radio base station) which allows to provide the message *m*' to the other user equipment minimizing a number of (D2D) transmissions to reach any other user equipment in the broadcast area (or portion of broadcast area superimposed to the cell served by the radio base station). Particularly, the selected first receiver of the message *m*' is the user equipment which is able to provide the message *m'* to a farthest user equipment (from the first receiver) among the user equipment in the broadcast area (or portion of broadcast area superimposed to the cell served by the radio base station) with a minimum number of D2D transmission.

Afterwards, the broadcast of the message *m'* may proceed according to the broadcast procedure **200** described above.

The D2D-based messages broadcast according to embodiments of the present invention may perform the broadcast of a message to user equipment served by two or more different radio base station. For example, **Figure 4A** is a schematic diagram a portion of the wireless communication network **100** in which a D2D-based messages broadcast according to an embodiment of the present invention is implemented over two cells **405** and **410** of the wireless communication network **100.**

The cells **405** and **410** are neighboring cells along a boundary **415.** Communications within the cells **405** and **410** are managed by corresponding radio base stations **420** and **425,** respectively.

In the example of **Figure 4A****,** three user equipment **UE₀₋₂** are comprised in the (first) cell **405** and, thus, are served by the (first) radio base station **420,** while four further user equipment **UE₃₋₆** are comprised in the (second) cell **410** and, thus, are served by the (second) radio base station **425.**

All the user equipment **UE₀₋₆** in the example of **Figure 4A** are comprised in a broadcast area **430** defined for the propagation of the message **m.**

It is assumed that user equipment **UE₁** generates the message **m** to be broadcasted and transmits (as indicated by arrows **tx₁** in **Figure 4A****)** on the sidelink SL according to the scheduling grant assigned by the radio base station **405** that implements a (first) instance of the broadcast procedure **200.**

The message **m** is received by the user equipment **UE₂** and **UE₀** as described above. In their turn, the user equipment **UE₂** and **UE₀** transmit (indicated by arrows **tx₀** and **tx₂** in **Figure 4A****)** the message **m** on the sidelink SL according to the scheduling grant assigned by the radio base station **405.** Such D2D-based broadcast of the message **m** can be received also by user equipment **UE₃₋₅** served by the radio base station **425.**

The one or more receiving user equipment **UE₃₋₅** may transmit a RAC request to the radio base station **425** (as indicated by dashed arrows **tx_{UL3}**, **tx_{UL4}** and **tx_{UL3}** in **Figure 4A****),** i.e. the one or more receiving user equipment **UE₃₋₅** operate as the user equipment that generates the message **m in** the cell **410.** Accordingly, the radio base station **410** implements a (second) instance of the broadcast procedure **200** for broadcasting the message **m** in the respective cell **410.**

Advantageously, the new instance of the broadcast procedure **200** implemented by the radio base station **425** is substantially independent from the instance of the broadcast procedure **200** implemented by its neighboring cell **420.**

It should be noted that a propagation delay *τ_{d}* is introduced each time a boundary between cells, such as the boundary **415,** is crossed. Indeed, every time the message **m** is received by a user equipment, such as the user equipment **UE₃₋₅** in a new cell, such as the cell **410,** RAC and BSR handshake has to be completed by one or more of the user equipment **UE₃₋₅** in the cell **410** before initiating a D2D-based broadcast of the message **m.** Such occurrence may slow down the propagation of the message **m** in the wireless communication network **100.**

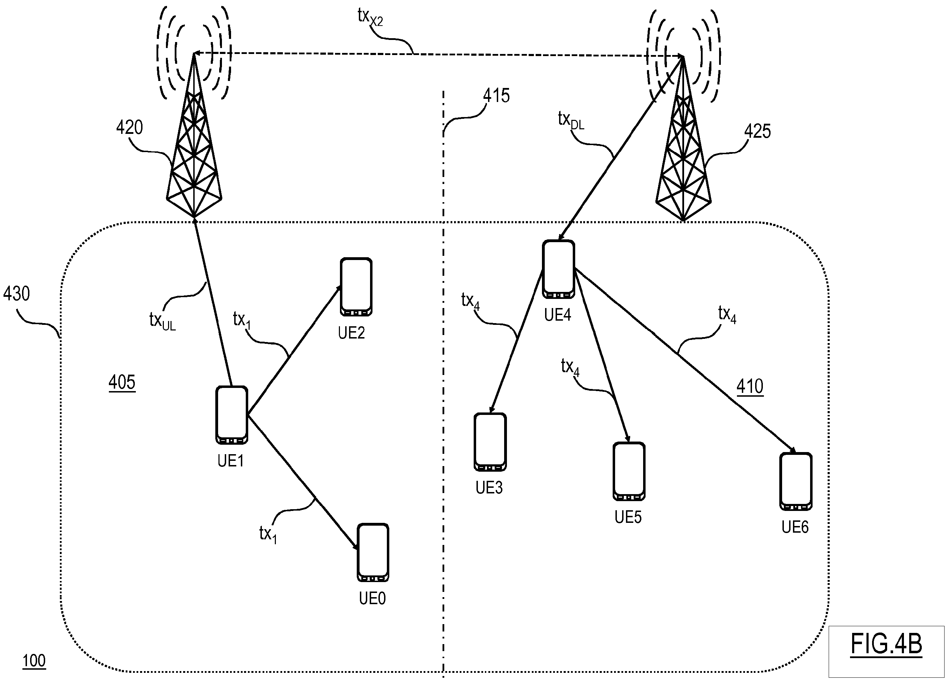

Advantageously, in an alternative embodiment of the invention, a X2 interface is exploited, arranged for communication between radio base stations, in order to eliminate, or at least reduce, the propagation delay *τ_{d}* as shown in **Figure 4B****,** which is a schematic diagram a portion of the wireless communication network **100** in which a D2D-based messages broadcasting according to an alternative embodiment of the present invention is implemented over two cells **405** and **410** of the wireless communication network **100.**

In this case, the broadcast procedure **200** is modified in the following manner. The radio base station **420** sends also an uplink scheduling grant in addition to the sidelink scheduling grant in response to the RAC and BSR sent by the user equipment **UE₁**. Accordingly, the user equipment **UE₁** sends (as indicated by arrow **tx_{UL}** in **Figure 4B****)** the message m also to the radio base station **420** using the network resources allocated by the uplink scheduling grant in addition to D2D transmitting the message **m** on the sidelink SL according to the scheduling grant assigned by the radio base station **420** .

The radio base station **420** forwards the received message m to the neighboring cell **425** through the X2 interface (as indicated by dashed arrow **tx_{X2}** in **Figure 4B****).**

The radio base station **425** selects one or more of the user equipment **UE₃₋₆**, such as user equipment **UE₄** in the example of **Figure 4B****,** within the respective cell **410.** Preferably, the radio base station **425** may select which user equipment **UE₃₋₆** provide with the message m according to a configurable policy. For example, the radio base station **425** may select the user equipment **UE₄** having the minimum maximum shortest path (similarly as described above) with respect to other user equipment **UE₃₋₆** within the broadcast area.

Therefore, the radio base station **425** sends the message **m** to the selected user equipment **UE₄** (as indicated by arrow **tx_{DL}** in **Figure 4B****).** In addition, the radio base station **425** implements a respective instance of the broadcast procedure **200.** This allows the radio base station **425** to implement an instance of the broadcast procedure **200** without the need for receiving a RAC request from one of the user equipment **UE₃₋₆** within the respective cell **410.**

Afterwards, the radio base station **425** schedules the user equipment **UE₄,** storing the message **m,** for the transmission on the sidelink in order to allow the user equipment **UE₄** transmitting the message **m** to others user equipment **UE₃**, ₅₋₆ within the respective cell **410**

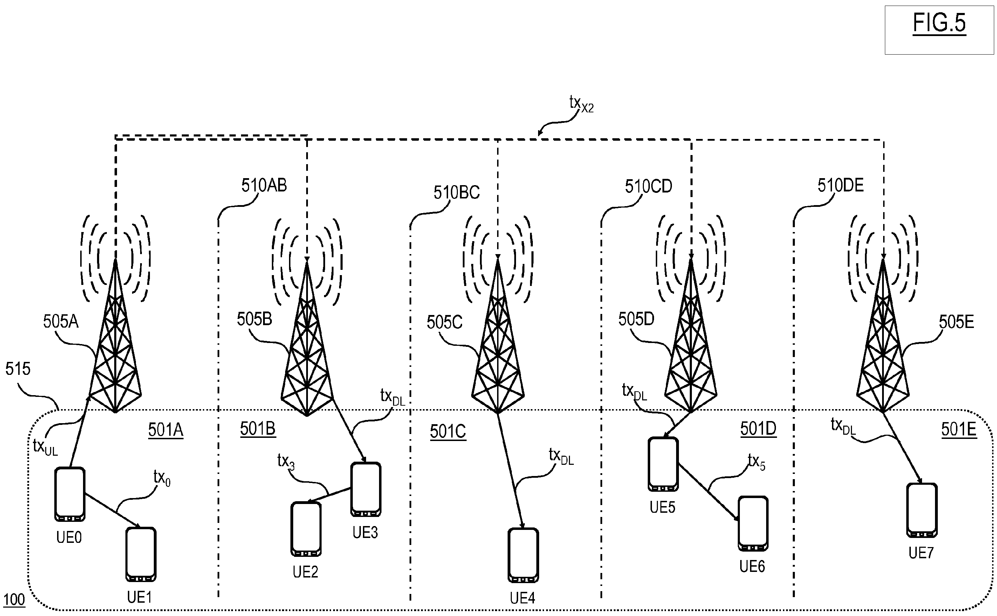

It should be noted that the radio base station that receives the message to be broadcasted through the uplink transmission may select to which radio base station it should send the message to be broadcasted based on the knowledge of the broadcast area (obtained from the message to be broadcasted as described above) as can be appreciated from **Figure 5****,** which is a schematic diagram a portion of the wireless communication network **100** in which a D2D-based messages broadcast according to an embodiment of the present invention is implemented over five cells **501A-E** of the wireless communication network **100.**

Communications within each one of the five cells **501A-E** is managed by a respective radio base station **505A-E.**

In the example at issue, each cell **501A-E** is adjacent at least to another one of the cells **501A-E.** A (first) boundary **510AB** adjoins cell **501A** from adjacent cell **501B,** a (second) boundary **510BC** adjoins cell **501B** from adjacent cell **501C,** a (third) boundary **510CD** adjoins cell **501C** from adjacent cell **501D**, a (fourth) boundary **510DE** adjoins cell **501D** from adjacent cell **501E**.

According to embodiments of the present invention, when a radio base station **505A-E,** e.g. the radio base station **505A,** receives a message m, provided on the uplink UL (as described above) by a served user equipment, e.g. user equipment **UE₀**, alongside implementing an instance of the broadcast procedure **200** for managing the D2D-based broadcast of the message **m,** the radio base station **505A** operates as follows.

The radio base station **505A** (storing the message **m)** may transmit - through the X2 interface **X2** - the message **m** substantially simultaneously to any other radio base station (i.e., the radio base stations **505B-E** in the example of **Figure 5****)** of the wireless mobile network **100** whose respective cell is, at least partially, superimposed to the broadcast area **515.**

Indeed, the radio base station **505A** determines the extent of the broadcast area **515** associated with the message m from the information provided with, or within, the message **m** by the user equipment **UE₀**. Based on the knowledge of the broadcast area **515,** the radio base station **505A** is able to identify which radio base stations, i.e. the radio base stations **505B-E,** serve the cells, i.e. the cells **505B-E,** comprised in the broadcast area **515** should receive the message **m** and forward the latter to all of the radio base stations, i.e. the radio base station **505B-E,** simultaneously.

Upon receiving the message **m,** each radio base station **505B-E** implements a respective instance of the broadcast procedure **200** in order to manage the propagation of the message **m** within the respective cell **501B-E** substantially independently from the other radio base stations **505B-E.**

Thus, the propagation (i.e., the broadcast) of the message **m** may advance substantially at the same time in each one of the cells **501A-E** of the wireless communication network **100** comprised in the broadcast area **515,** sensibly reducing an overall time required for the broadcast of the message **m.**

This constitutes a desirable improvement in, for example, vehicular scenarios (i.e., real-time provision of traffic/accident messages) in which a message should be delivered along a road crossing a plurality of cells, e.g. the cells **501A-E,** served by respective radio base stations, e.g. the radio base stations **505A-E.** In fact, all the radio base stations, e.g. the radio base stations **505A-E,** involved can start managing the D2D-based message broadcast substantially at the same time, drastically reducing the latency.

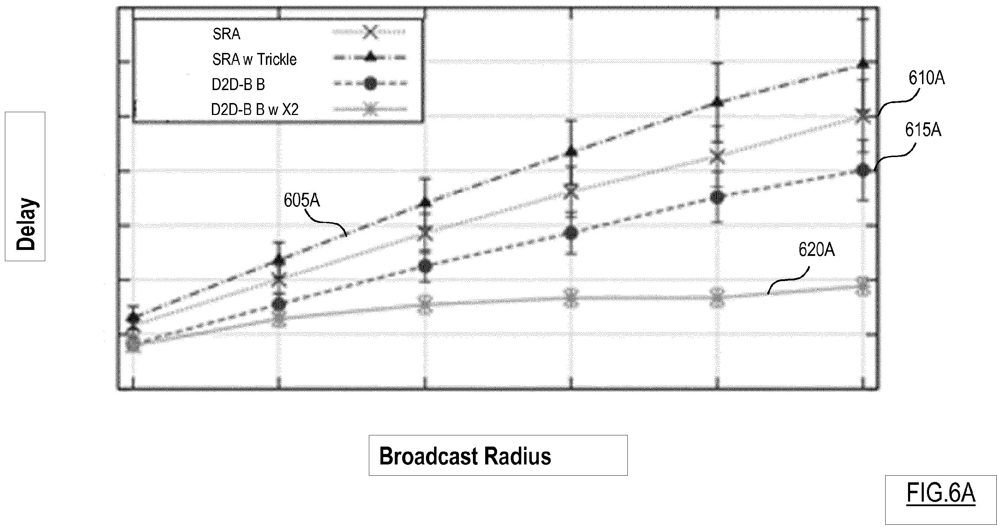

The D2D-based messages broadcast according to embodiment of the present invention has been evaluated in a test scenario described below and compared with known expedients as qualitatively shown in **Figures 6A - 6C****,** which are plots of figures of merit of the D2D-based messages broadcasting according to an embodiment of the present invention and known expedients based on a simulation of a test scenario.

The test scenario considers a portion of a wireless communication network comprising five radio base stations (e.g., the test scenario is substantially similar to the example of **Figure 5****),** where each radio base station is located at a distance *d* from other adjacent radio base station, in the non-limiting test scenario the distance *d* has been set equal to 400 m (i.e., *d* = 400 m). Moreover, in the test scenario the user equipment are randomly located roughly along a straight line crossing cells served by the five radio base stations, as they represent user equipment carried by vehicles on a road.

The parameters of the test scenario are provided in the following **Table 1.**

**Table 1**

| **Test Scenario Parameters** | |
|---|---|
| Bandwidth | 10 MHz (50 RBs) |
| UE TX Power (UL) | 33 dBm |
| UE TX Power (SL) | 15 dBm |
| Sidelink CQI | 7 |
| Number of UEs | 40 per cell (200 total) |
| Test duration | 100 s |
| Number of independent replicas | 3 |

wherein the number of independent replicas indicates the number of times that the test has been reiterated. Indeed, the overall results of the test have been obtained by averaging the results of each independent replica of the test performed.

The test scenario of data traffic, related to the D2D-based message broadcast, through the network **100** is generated as follows. For the test duration, one new event (i.e., a message) is generated on each second by a user equipment randomly selected among the user equipment comprised in the test scenario. Particularly, each selected user equipment triggers the implementation of an instance of the broadcast procedure **200** by sending a message to be broadcasted with a predetermined size of, e.g., 10 bytes to the respective serving radio base station at the application level.

The D2D-based messages broadcast according to embodiments of the present invention (both with and without exploiting the X2 interface for exchanging the message among radio base stations) is compared with the SRA mechanism (both with and without the Trickle algorithm) described in G. Nardini, G. Stea, A. Virdis, D. Sabella, M. Caretti: "Broadcasting in LTE-Advanced networks using multihop D2D communications", PIMRC 2016, Valencia, September 5-7, 2016.

The plot of **Figure 6A** shows an average application-level delay (i.e., the time required for receiving the message computed from the start of the D2D-based message broadcast) experienced by the user equipment within the broadcast area. Particularly, the delay experienced by user equipment is expressed as a function of the broadcast radius *r_{b}* of the broadcast area considered.

A (first) curve **605A,** dash-dotted line with triangles, describes the trend of the average application-level delay as a function of the broadcast radius *r_{b}* when the broadcast in the test scenario is implemented by instantiating the SRA exploiting the Trickle algorithm.

A (second) curve **610A,** dotted line with crosses, describes the trend of the average application-level delay as a function of the broadcast radius *r_{b}* when the broadcast in the test scenario is implemented by instantiating the SRA (without exploiting the Trickle algorithm).

A (third) curve **615A,** dashed line with dots, describes the trend of the average application-level delay as a function of the broadcast radius *r_{b}* when the broadcast in the test scenario is implemented by instantiating the D2D-based broadcast according to an embodiment of the present invention.

Finally, a (fourth) curve **620A,** full line with asterisks, describes the trend of the average application-level delay as a function of the broadcast radius *r_{b}* when the broadcast in the test scenario is implemented by instantiating the D2D-based broadcast according to an embodiment of the present invention that exploits the X2 interface for forwarding the message among radio base stations.

**Figure 6A** highlights that the SRA with Trickle algorithm (curve **605A)** obtains the worst performance, because of the message suppression mechanism enforced by the Trickle algorithm in order to minimize a number of transmissions of the message. Both the considered embodiments of the D2D-based broadcast according to embodiments of the present invention (curves **615A** and **620A)** show better performance than SRA and SRA with Trickle algorithm (curves **605A** and **610A).** Particularly, the D2D-based broadcast exploiting X2 interface (curve **620A)** provides substantially improved performance with respect to other solutions as the broadcast radius *r_{b}* increases.

It should be noted that the delays of the message in the D2D-based broadcast exploiting X2 interface substantially exhibits an upper bound substantially independent from the extent of the broadcast area (e.g., the length of the broadcast radius) and form the number of radio base stations comprised in the broadcast area due to the fact that each radio base station starts managing the broadcast within the corresponding cell substantially at the same time. Thus, the upper bound for the delays in the whole broadcast area is determined by (i.e., is substantially equal to) the greater time among the times required to propagate the message within the cells comprised in the broadcast area.

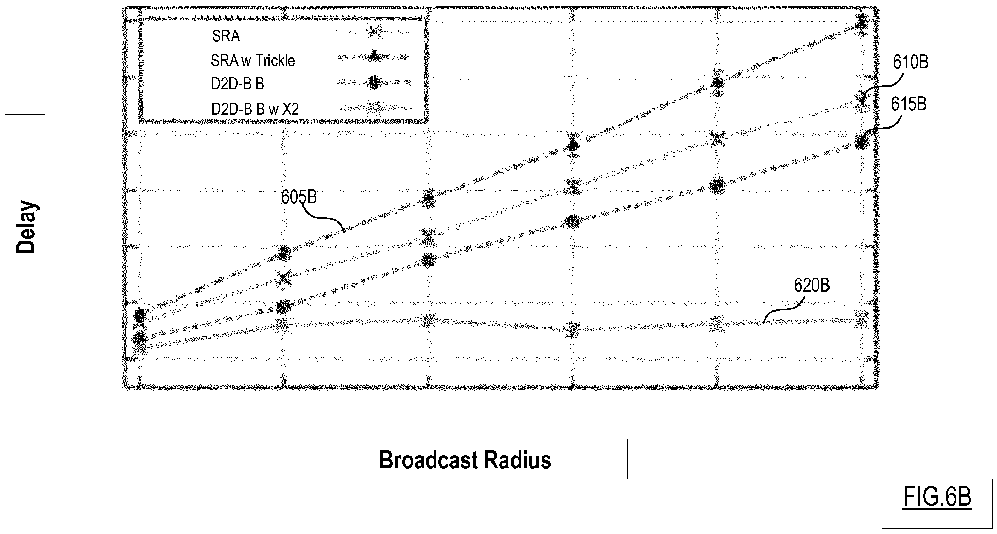

The plot of **Figure 6B** shows a 95^{th} percentile of the application-level delay experienced by the user equipment within the broadcast area. The 95^{th} percentile of the application-level delay represents the latency required for reaching almost the 95% of the user equipment within the broadcast area. Particularly, the 95^{th} percentile of the application-level delay experienced by user equipment is expressed as a function of the broadcast radius *r_{b}* of the broadcast area considered.

A (first) curve **605B,** dash-dotted line with triangles, describes the trend of the 95^{th} percentile of the application-level delay as a function of the broadcast radius *r_{b}* when the broadcast in the test scenario is implemented by instantiating the SRA exploiting the Trickle algorithm.

A (second) curve **610B,** dotted line with crosses, describes the trend of the 95^{th} percentile of the application-level delay as a function of the broadcast radius *r_{b}* when the broadcast in the test scenario is implemented by instantiating the SRA (without exploiting the Trickle algorithm).

A (third) curve **615B,** dashed line with dots, describes the trend of the 95^{th} percentile of the application-level delay as a function of the broadcast radius *r_{b}* when the broadcast in the test scenario is implemented by instantiating the D2D-based broadcast according to an embodiment of the present invention.

Finally, a (fourth) curve **620B,** full line with asterisks, describes the trend of the 95^{th} percentile of the application-level delay as a function of the broadcast radius *r_{b}* when the broadcast in the test scenario is implemented by instantiating the D2D-based broadcast according to an embodiment of the present invention that exploits the X2 interface for forwarding the message among radio base stations.

**Figure 6B** highlights that the SRA with Trickle algorithm (curve **605B)** obtains again the worst performance, because of the message suppression mechanism enforced by the Trickle algorithm in order to minimize a number of transmissions of the message. Both the considered embodiments of the D2D-based broadcast according to embodiments of the present invention (curves **615B** and **620B)** show better performance than SRA and SRA with Trickle algorithm (curves **605B** and **610B).**

For example, the D2D-based broadcast exploiting X2 interface (curve **620B),** according to the test scenario parameters mentioned above, guarantees that the broadcast area with a broadcast radius *r_{b}* of 1200 m (*r_{b}* = 1200 m; i.e., corresponding to the rightmost mark on the abscissa axis in the plot of **Figure 6B****)** or less is covered in less than 40 ms (corresponding to the second mark on the ordinate axis starting from the origin point in the plot of **Figure 6B****).** Moreover, for shorter broadcast radius *r_{b}* ranges (e.g. *r_{b}* ≤ 200m; corresponding to the first mark on the abscissa axis starting from the origin point in the plot of **Figure 6B****),** about only 20-25 ms (the first mark on the ordinate axis starting from the origin point in the plot of **Figure 6B** indicating 20 ms),or less, are required to complete the broadcasting.

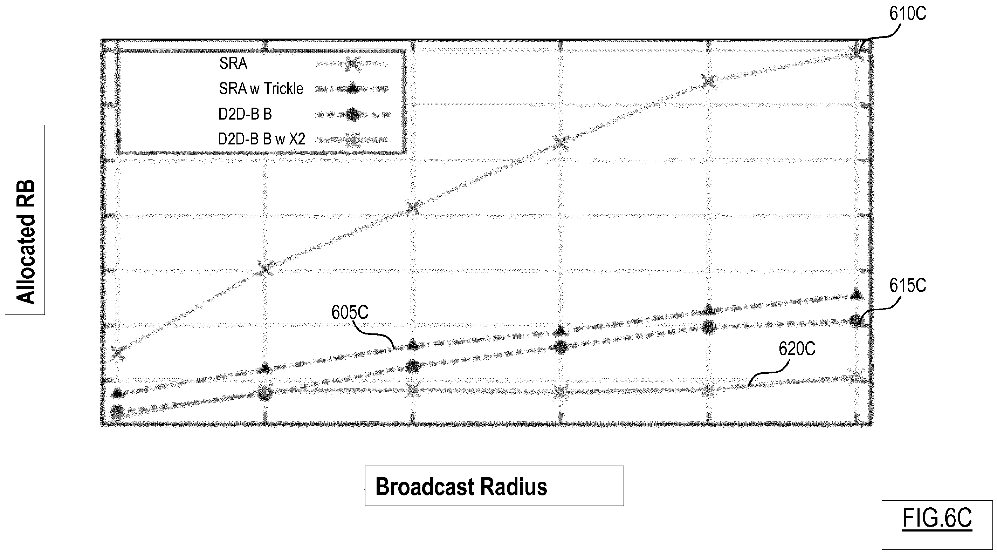

The plot of **Figure 6C** shows an average number of network resources, expressed as resource blocks RB, required to complete the broadcast of a message within the broadcast area. Particularly, the average number of network resources required is expressed as a function of the broadcast radius *r_{b}* of the broadcast area considered.

A (first) curve **605C,** dash-dotted line with triangles, describes the trend of the average number of network resources required as a function of the broadcast radius *r_{b}* when the broadcast in the test scenario is implemented by instantiating the SRA exploiting the Trickle algorithm.

A (second) curve **610C,** dotted line with crosses, describes the trend of the average number of network resources required as a function of the broadcast radius *r_{b}* when the broadcast in the test scenario is implemented by instantiating the SRA (without exploiting the Trickle algorithm).

A (third) curve **615C,** dashed line with dots, describes the average number of network resources required as a function of the broadcast radius *r_{b}* when the broadcast in the test scenario is implemented by instantiating the D2D-based broadcast according to an embodiment of the present invention.

Finally, a (fourth) curve **620C,** full line with asterisks, describes the average number of network resources required as a function of the broadcast radius *r_{b}* when the broadcast in the test scenario is implemented by instantiating the D2D-based broadcast according to an embodiment of the present invention that exploits the X2 interface for forwarding the message among radio base stations.

**Figure 6C** highlights that the SRA (without Trickle algorithm, curve **605A)** obtains the worst performance, lacking the message suppression mechanism enforced by the Trickle algorithm that minimize a number of transmissions of the message. Both the considered embodiments of the D2D-based broadcast according to embodiments of the present invention (curves **615C** and **620C)** show better performance than SRA and SRA with Trickle algorithm (curves **605C** and **610C).** Particularly, the D2D-based broadcast exploiting X2 interface (curve **620C)** again shows the best performance due to the fact that each radio base station manages the broadcast of the message within the respective cell substantially independently from, and substantially at the same time of, the other radio base stations.

## Claims

1. A method of broadcasting a message **(m)** among user equipment (**UE₀₋₈**) in a broadcast area **(115; 515)** covered by a wireless communication network **(100),** the wireless communication network comprising at least one radio base station **(105; 420, 425; 505_{A-E}**) which is adapted to manage communications of user equipment in one or more respective served areas **(110; 405, 410; 501_{A-E}**), the method comprising having the at least one radio base station:
identify **(210)** user equipment comprised in the broadcast area,
and reiterate the following operations a) - e):
a) among the user equipment within the broadcast area, estimating **(215)** a set of transmitter user equipment storing the message to be broadcasted by estimating a user equipment within the broadcast area being a transmitter user equipment if a storing probability *Pᵢ* that said user equipment stores the message **(m)** equals or exceeds a predetermined threshold *α_{TH}*;
b) among the user equipment within the broadcast area, estimating **(220)** a set of receiver user equipment not storing the message and being able to receive the message sent by at least one transmitter user equipment through a device to device communication by estimating a user equipment within the broadcast area being a receiver user equipment if a reception probability *Pⱼ* that said user equipment receives the message **(m)** through a device to device transmission equals or exceeds a further predetermined threshold *α_{TH},* said reception probability *Pⱼ* being calculated as ${P}_{j} = 1 - {\prod }_{i ∈ TS} \left(1-{P}_{i}⋅{P}_{i , j}⋅{x}_{i}\right)$, where *xᵢ* is a binary variable that is set to one if a corresponding transmitter user equipment is selected for the subset of transmitter user equipment for transmitting the message (m), and is set to zero otherwise, *P_{i,j}* is a probability that a transmission from the transmitter user equipment is correctly received and decoded by a receiver user equipment, *TS* is the set of transmitter user equipment storing the message, said probability *P_{i,j}* that a transmission from the transmitter user equipment is correctly received and decoded by a receiver user equipment being computed based on an estimate of signal attenuation between couples of transmitter user equipment and receiver user equipment and by exploiting Block Error Rate curves used for selecting a Modulation and Coding Scheme for transmissions, and
c) selecting **(225)** a subset of transmitter user equipment for transmitting the message ensuring that the receiver user equipment in said set of receiver user equipment receive the message with a predetermined confidence corresponding to said reception probability *Pⱼ*;
d) having transmitter user equipment of said selected subset transmit **(227)** the message **(m);**
e) assessing **(230)** a new storing probability *Pᵢ* of storing the message **(m)** for each user equipment comprised in the broadcast area after network resources (**RB₀₋₆**) have been allocated to the selected transmitter user equipment (**UEᵢ**), said assessing comprising setting for each user equipment of the set of receiver user equipment comprising the receiver user equipment having a reception probability *Pⱼ* that equals or exceeds said further predetermined threshold *α_{TH}* the new storing probability *Pᵢ* to the corresponding reception probability *Pⱼ*;
while for at least one user equipment comprised in the broadcast area the newly assessed storing probability *Pᵢ* of storing the message **(m)** is lower than the predetermined threshold *α_{TH},* wherein:
said set of transmitter user equipment comprises user equipment for which the storing probability *Pᵢ* that each of said user equipment stores the message **(m)** equals or exceeds the predetermined threshold *α_{TH},* user equipment for which the storing probability *Pᵢ* that said user equipment stores the message **(m)** is lower than said predetermined threshold *α_{TH}* being not comprised in said set of transmitter user equipment;
in a first iteration of the operation a), only a user equipment having generated the message **(m)** stores the message **(m)** with a storing probability *Pᵢ* equal to 1, while a storing probability *Pi* that the other user equipment store the message **(m)** is lower than said predetermined threshold *α_{TH.}*;
said estimate of signal attenuation between couples of transmitter user equipment and receiver user equipment is an estimation of signal attenuation due to path loss between said couples of transmitter user equipment and receiver user equipment in the broadcast area carried out by exploiting a knowledge of the position of all user equipment in a cell of the wireless communication network **(100).**

2. The method according to claim 1, wherein selecting **(225)** a subset of transmitter user equipment for transmitting the message **(m)** comprises selecting a minimum number of transmitter user equipment of said set ensuring that the receiver user equipment receive the message with a predetermined confidence.

3. The method according to any one of the preceding claims, wherein selecting **(225)** a subset of transmitter user equipment for transmitting the message **(m)** comprises solving a set cover problem, and wherein the set cover problem is formulated as follows: $min {\sum }_{i ∈ TS} {x}_{i} ,$ *such that* $1 - {\prod }_{i ∈ TS} \left(1-{P}_{i}⋅{P}_{i , j}⋅{x}_{i}\right) \geq {α}_{TH} ∀ j ∈ RS$ ${x}_{i} ∈ \left\{0, 1\right\} ∀ i ∈ TS ,$ where *RS* is set of receiver user equipment, and *α_{TH}* is the predetermined threshold.

4. The method according to any one of the preceding claims, further comprising allocating **(225)** network resources (**RB₀₋₆**) for the transmission of the message **(m)** to selected transmitter user equipment (**UEᵢ**), wherein said allocating network resources comprises allocating a portion of network resources, available for communications from user equipment (**UE₀₋₁₅**) towards the radio base station **(105),** to selected transmitter user equipment (**UEᵢ**) for performing a device-to-device communication.

5. The method according to claim 4, wherein allocating **(225)** network resources (**RB₀₋₆**) further comprises exploiting frequency reuse in order to allocating a same network resource to two or more selected transmitter user equipment (**UEᵢ**); assessing whether a reduction in the reception probability (*Pⱼ*) of receiving the message **(m)** through a device to device transmission occurs for any receiver user equipment due to interference provoked by exploiting frequency reuse for two or more selected transmitter user equipment (**UEᵢ**), and cancelling the frequency reuse whether the reception probability (*Pᵢ*) drops below the further predetermined threshold (*α_{TH}*) for any receiver user equipment.

6. The method according to any one of the preceding claims, further comprising allocating network resources to at least one selected transmitter user equipment (**UEᵢ**, **UE₁**) for transmitting the message **(m)** to the radio base station **(105);** providing the message **(m)** to at least one further radio base station **(425, 505_{B-E}**) through an interface **(X2)** arranged for communication between radio base stations, the served area **(410, 501_{B-E}**) of the further radio base station being at least partially superimposed to the broadcast area **(115),** and having the at least one further radio base station providing the message **(m)** to at least one user equipment located within the broadcast area.

7. A wireless communication network **(100)** comprising at least one radio base station **(105; 420, 425; 505_{A-E}**) which is adapted to manage communications of user equipment (**UE₀₋₁₅**) in one or more respective served areas **(110; 405, 410; 501_{A-E}**), the least one radio base station being configured for implementing the method according to any one of the preceding claims 1 to 6.

## Patentansprüche

1. Verfahren zum Broadcasting einer Nachricht **(m)** unter Teilnehmereinrichtungen (**UE₀₋₈**) in einem Broadcastgebiet **(115; 515),** das von einem drahtlosen Kommunikationsnetzwerk **(100)** abgedeckt wird, wobei das drahtlose Kommunikationsnetzwerk mindestens eine Funkbasisstation **(105; 420, 425; 505_{A-E}**) umfasst, die angepasst ist, eine Kommunikation von Teilnehmereinrichtungen in einem oder mehreren jeweiligen bedienenden Gebieten **(110; 405, 410; 501_{A-E}**) zu verwalten, wobei das Verfahren umfasst, die mindestens eine Funkbasisstation zu Folgendem zu veranlassen:
Identifizieren **(210)** von Teilnehmereinrichtungen, die im Broadcastgebiet umfasst sind, und Wiederholen der folgenden Operationen a) - e):
a) Schätzen **(215)** eines Satzes von Sendeteilnehmereinrichtungen, in denen die mittels Broadcasting zu übermittelnde Nachricht gespeichert ist, unter den Teilnehmereinrichtungen im Broadcastgebiet durch Schätzen, dass eine Teilnehmereinrichtung im Broadcastgebiet eine Sendeteilnehmereinrichtung ist, wenn eine Speicherwahrscheinlichkeit *Pᵢ*, dass die Teilnehmereinrichtung die Nachricht **(m)** speichert, mit einem vorbestimmten Schwellwert *α_{TH}* gleich ist oder denselben überschreitet;
b) Schätzen **(220)** eines Satzes von Empfangsteilnehmereinrichtungen, in denen die Nachricht nicht gespeichert ist und die in der Lage sind, die Nachricht, die von mindestens einer Sendeteilnehmereinrichtung über eine Vorrichtung-zu-Vorrichtung-Kommunikation gesendet wird, unter den Teilnehmereinrichtungen im Broadcastgebiet durch Schätzen zu empfangen, dass eine Teilnehmereinrichtung im Broadcastgebiet eine Empfangsteilnehmereinrichtung ist, wenn eine Empfangswahrscheinlichkeit *Pⱼ,* dass die Teilnehmereinrichtung die Nachricht **(m)** durch eine Vorrichtung-zu-Vorrichtung-Übertragung empfängt, mit einem weiteren vorbestimmten Schwellwert *α_{TH}* gleich ist oder denselben überschreitet, wobei die Empfangswahrscheinlichkeit *Pⱼ* als ${P}_{j} = 1 - {\prod }_{i ∈ TS} \left(1-{P}_{i}⋅{P}_{i , j}⋅{x}_{i}\right)$, berechnet wird, wo *xᵢ* eine binäre Variable ist, die auf eins eingestellt ist, wenn eine entsprechende Sendeteilnehmereinrichtung für den Untersatz von Sendeteilnehmereinrichtungen zum Übertragen der Nachricht **(m)** ausgewählt wird, und andernfalls auf null eingestellt ist, *P_{i,j}* eine Wahrscheinlichkeit ist, dass eine Übertragung von der Sendeteilnehmereinrichtung von einer Empfangsteilnehmereinrichtung korrekt empfangen und decodiert wird, *TS* der Satz von Sendeteilnehmereinrichtungen ist, die die Nachricht speichern, wobei die Wahrscheinlichkeit *P_{i,j}*, dass eine Übertragung von der Sendeteilnehmereinrichtung von einer Empfangsteilnehmereinrichtung korrekt empfangen und decodiert wird, auf Basis einer Schätzung einer Signaldämpfung zwischen Paaren von Sendeteilnehmereinrichtungen und Empfangsteilnehmereinrichtungen und durch Nutzen von Blockfehlerratenkurven berechnet wird, die zum Auswählen eines Modulations- und Codierschemas für Übertragungen verwendet werden, und
c) Auswählen **(225)** eines Untersatzes von Sendeteilnehmereinrichtungen zum Übertragen der Nachricht unter Sicherstellung, dass die Empfangsteilnehmereinrichtung in dem Satz von Empfangsteilnehmereinrichtungen die Nachricht mit einem vorbestimmten Vertrauen, das der Empfangswahrscheinlichkeit *Pⱼ* entspricht, empfängt;
d) Veranlassen, dass Sendeteilnehmereinrichtungen des ausgewählten Untersatzes die Nachricht **(m)** übertragen **(227);**
e) Abschätzen **(230)** einer neuen Speicherwahrscheinlichkeit *Pᵢ* des Speicherns der Nachricht **(m)** für jede Teilnehmereinrichtung, die im Broadcastgebiet umfasste ist, nachdem den ausgewählten Sendeteilnehmereinrichtungen (**UEᵢ**) Netzwerkressourcen **(RB₀₋₆)** zugeteilt wurden, wobei das Abschätzen das Einstellen der neuen Speicherwahrscheinlichkeit *Pᵢ* auf die entsprechende Empfangswahrscheinlichkeit *Pⱼ* für jede Teilnehmereinrichtung des Satzes von Empfangsteilnehmereinrichtungen umfasst, die die Empfangsteilnehmereinrichtung umfassen, die eine Empfangswahrscheinlichkeit *Pⱼ* aufweisen, die mit dem weiteren vorbestimmten Schwellwert *α_{TH}* gleich ist oder denselben überschreitet;
während für mindestens eine Teilnehmereinrichtung, die im Broadcastgebiet umfasst ist, die neue geschätzte Speicherwahrscheinlichkeit *Pᵢ* des Speicherns der Nachricht **(m)** niedriger ist als der vorbestimmte Schwellwert *α_{TH},* wobei:
der Satz von Sendeteilnehmereinrichtungen Teilnehmereinrichtungen umfasst, für die die Speicherwahrscheinlichkeit *Pᵢ*, dass jede der Teilnehmereinrichtungen die Nachricht **(m)** speichert, gleich dem voreingestellten Schwellwert *α_{TH}* ist oder denselben überschreitet, wobei Teilnehmereinrichtungen, für die die Speicherwahrscheinlichkeit *Pᵢ*, dass die Teilnehmereinrichtungen die Nachricht **(m)** speichern, niedriger ist als der vorbestimmte Schwellwert *α_{TH},* im Satz von Sendeteilnehmereinrichtungen nicht umfasst sind;
bei einer ersten Wiederholung der Operation a) nur eine Teilnehmereinrichtung, die die Nachricht **(m)** erzeugt hat, die Nachricht **(m)** mit einer Speicherwahrscheinlichkeit *Pᵢ* gleich 1 speichert, während eine Speicherwahrscheinlichkeit *Pᵢ*, dass die anderen Teilnehmereinrichtungen die Nachricht **(m)** speichern, niedriger ist als der vorbestimmte Schwellwert *α_{TH},*
die Schätzung einer Signaldämpfung zwischen Paaren von Sendeteilnehmereinrichtungen und Empfangsteilnehmereinrichtungen eine Schätzung einer Signaldämpfung infolge eines Pfadverlusts zwischen den Paaren von Sendeteilnehmereinrichtungen und Empfangsteilnehmereinrichtungen im Broadcastgebiet ist, die durch Nutzen einer Kenntnis der Position von allen Teilnehmereinrichtungen in einer Zelle des drahtlosen Kommunikationsnetzwerks **(100)** umgesetzt wird.

2. Verfahren nach Anspruch 1, wobei das Auswählen **(225)** eines Untersatzes von Sendeteilnehmereinrichtungen zum Übertragen der Nachricht **(m)** das Auswählen einer Mindestanzahl von Sendeteilnehmereinrichtungen des Satzes unter Sicherstellung, dass die Empfangsteilnehmereinrichtungen die Nachricht mit einem vorbestimmten Vertrauen empfangen, umfasst.

3. Verfahren nach einem der vorhergehenden Ansprüche, wobei das Auswählen **(225)** eines Untersatzes von Sendeteilnehmereinrichtungen zum Übertragen der Nachricht **(m)** das Lösen eines Mengenabdeckungsproblems umfasst und wobei das Mengenabdeckungsproblem wie folgt formuliert ist: $min {\sum }_{i ∈ TS} {x}_{i} ,$ derart, dass $1 - {\prod }_{i ∈ TS} \left(1-{P}_{i}⋅{P}_{i , j}⋅{x}_{i}\right) \geq {α}_{TH} ∀ j ∈ RS$ ${x}_{i} ∈ \left\{0, 1\right\} ∀ i ∈ TS ,$ wo *RS* ein Satz von Empfangsteilnehmereinrichtungen und *α_{TH}* der vorbestimmte Schwellwert ist.

4. Verfahren nach einem der vorhergehenden Ansprüche, das ferner das Zuteilen **(225)** von Netzwerkressourcen (**RB₀₋₆**) für die Übertragung der Nachricht **(m)** zu ausgewählten Sendeteilnehmereinrichtungen (**UEᵢ**) umfasst, wobei das Zuteilen von Netzwerkressourcen das Zuteilen eines Abschnitts von Netzwerkressourcen umfasst, die für eine Kommunikation von Teilnehmereinrichtungen (**UE₀₋₁₅**) mit der Funkbasisstation **(105)** zu ausgewählten Sendeteilnehmereinrichtungen (**UEᵢ**) zum Durchführen einer Vorrichtung-zu-Vorrichtung-Kommunikation verfügbar sind.

5. Verfahren nach Anspruch 4, wobei das Zuteilen **(225)** von Netzwerkressourcen (**RB₀₋₆**) ferner das Nutzen einer erneuten Frequenzverwendung, um eine selbe Netzwerkressource zwei oder mehr ausgewählten Sendeteilnehmereinrichtungen (**UEᵢ**) zuzuteilen; das Abschätzen, ob eine Reduzierung der Empfangswahrscheinlichkeit (*Pⱼ*) des Empfangens der Nachricht **(m)** durch eine Vorrichtung-zu-Vorrichtung-Übertragung für eine Empfangsteilnehmereinrichtung infolge einer Interferenz erfolgt, die durch Nutzen einer erneuten Frequenzverwendung für zwei oder mehr ausgewählte Sendeteilnehmereinrichtungen (**UEᵢ**) bewirkt wird, sowie das Abbrechen der erneuten Frequenzverwendung umfasst, ob die Empfangswahrscheinlichkeit (*Pᵢ*) für eine Empfangsteilnehmereinrichtung unter den vorbestimmten Schwellwert (*α_{TH}*) abfällt.

6. Verfahren nach einem der vorhergehenden Ansprüche, das ferner das Zuteilen von Netzwerkressourcen zu mindestens einer ausgewählten Sendeteilnehmereinrichtung (**UEᵢ, UE₁**) zum Übertragen der Nachricht **(m)** zur Funkbasisstation **(105);** das Bereitstellen der Nachricht **(m)** für mindestens eine weitere Funkbasisstation **(425, 505_{B-E}**) über eine Schnittstelle **(X2),** die für eine Kommunikation zwischen Funkbasisstationen angeordnet ist, wobei das bediente Gebiet **(410, 501_{B-E}**) der weiteren Funkbasisstation dem Broadcastgebiet **(115)** mindestens teilweise überlagert ist, sowie das Veranlassen der mindestens einen weiteren Funkbasisstation umfasst, die Nachricht **(m)** mindestens einer Teilnehmereinrichtung, die sich im Broadcastgebiet befindet, bereitzustellen.

7. Drahtloses Kommunikationsnetzwerk **(100),** das mindestens eine Funkbasisstation **(105; 420, 425; 505_{A-E}**) umfasst, die angepasst ist, eine Kommunikation von Teilnehmereinrichtungen (**UE₀₋₁₅**) in einem oder mehreren jeweiligen bedienten Gebieten **(110; 405, 410; 501_{A-E}**) zu verwalten, wobei die mindestens eine Funkbasisstation zum Implementieren des Verfahrens nach einem der vorhergehenden Ansprüche 1 bis 6 ausgelegt ist.

## Revendications

1. Procédé de diffusion d'un message (m) parmi des équipements utilisateur (UE₀₋₈) dans une zone de diffusion (115 ; 515) couverte par un réseau de communication sans fil (100), le réseau de communication sans fil comprenant au moins une station de base radio (105 ; 420, 425 ; 505_{A-E}) qui est adaptée à gérer les communications des équipements utilisateur dans une ou plusieurs zones desservies respectives (110 ; 405, 410 ; 501_{A-E}), le procédé comprenant le fait que la ou les stations de base radio :
identifier (210) des équipements utilisateur compris dans la zone de diffusion,
et réitérer les opérations suivantes a) - e) :
a) parmi les équipements utilisateur dans la zone de diffusion, estimer (215) un ensemble d'équipements utilisateur émetteurs stockant le message à diffuser en estimant qu'un équipement utilisateur dans la zone de diffusion est un équipement utilisateur émetteur si une probabilité de stockage Pᵢ que ledit équipement utilisateur stocke le message (m) est égale ou supérieure à un seuil prédéterminé *αTH* ;
b) parmi les équipements utilisateur dans la zone de diffusion, estimer (220) un ensemble d'équipements utilisateur récepteurs ne stockant pas le message et étant capables de recevoir le message envoyé par au moins un équipement utilisateur émetteur via une communication dispositif à dispositif en estimant qu'un équipement utilisateur dans la zone de diffusion est un équipement utilisateur récepteur si une probabilité de réception Pⱼ que ledit équipement utilisateur reçoive le message (m) via une transmission dispositif à dispositif est égale ou supérieure à un autre seuil prédéterminé *αTH,* ladite probabilité de réception Pⱼ étant calculée comme suit : ${P}_{j} = 1 - {\prod }_{i} ∈ TS \left(1-{P}_{i}⋅{P}_{i},j⋅{x}_{i}\right)$ où xᵢ est une variable binaire qui est fixée à un si un équipement utilisateur émetteur correspondant est sélectionné pour le sous-ensemble d'équipements utilisateur émetteurs pour transmettre le message (m), et est fixée à zéro sinon, Pᵢ,j est une probabilité qu'une transmission de l'équipement utilisateur émetteur soit correctement reçue et décodée par un équipement utilisateur récepteur, TS est l'ensemble des équipements utilisateur émetteurs stockant le message, ladite probabilité Pᵢ,j qu'une transmission de l'équipement utilisateur émetteur soit correctement reçue et décodée par un équipement utilisateur récepteur étant calculée sur la base d'une estimation de l'atténuation du signal entre des couples d'équipements utilisateur émetteurs et d'équipements utilisateur récepteurs et en exploitant des courbes de taux d'erreur par bloc utilisées pour la sélection d'un schéma de modulation et de codage pour les transmissions, et
c) sélectionner (225) un sous-ensemble d'équipements utilisateur émetteurs pour transmettre le message en garantissant que les équipements utilisateur récepteurs dans ledit ensemble d'équipements utilisateur récepteurs reçoivent le message avec une confiance prédéterminée correspondant à ladite probabilité de réception Pⱼ ;
d) faire transmettre (227) le message (m) par les équipements utilisateur émetteurs dudit sous-ensemble sélectionné ;
e) évaluer (230) une nouvelle probabilité de stockage Pᵢ de stockage du message (m) pour chaque équipement utilisateur compris dans la zone de diffusion après que des ressources réseau (RB₀₋₆) ont été attribuées aux équipements utilisateur émetteurs sélectionnés (UEᵢ), ladite évaluation comprenant le fait d'attribuer, pour chaque équipement utilisateur de l'ensemble d'équipements utilisateur récepteurs, comprenant les équipements utilisateur récepteurs ayant une probabilité de réception Pᵢ qui est égale ou supérieure audit autre seuil prédéterminé *αTH,* la nouvelle probabilité de stockage Pᵢ à la probabilité de réception correspondante Pⱼ ; tant que, pour au moins un équipement utilisateur compris dans la zone de diffusion, la nouvelle probabilité de stockage Pᵢ de stockage du message (m) évaluée est inférieure au seuil prédéterminé *αTH,* lequel :
ledit ensemble d'équipements utilisateur émetteurs comprend des équipements utilisateur pour lesquels la probabilité de stockage Pᵢ que chacun desdits équipements utilisateur stocke le message (m) est égale ou supérieure au seuil prédéterminé *αTH,* des équipements utilisateur pour lesquels la probabilité de stockage Pᵢ que ledit équipement utilisateur stocke le message (m) est inférieure audit seuil prédéterminé *αTH* n'étant pas compris dans ledit ensemble d'équipements utilisateur émetteurs ;
lors d'une première itération de l'opération a), seul un équipement utilisateur ayant généré le message (m) stocke le message (m) avec une probabilité de stockage Pᵢ égale à 1, tandis qu'une probabilité de stockage Pᵢ que les autres équipements utilisateur stockent le message (m) est inférieure audit seuil prédéterminé *αTH* ;
ladite estimation de l'atténuation du signal entre des couples d'équipements utilisateur émetteurs et d'équipements utilisateur récepteurs est une estimation de l'atténuation du signal due à la perte de trajet entre lesdits couples d'équipements utilisateur émetteurs et d'équipements utilisateur récepteurs dans la zone de diffusion réalisée en exploitant une connaissance de la position de tous les équipements utilisateur dans une cellule du réseau de communication sans fil (100).

2. Procédé selon la revendication 1, lequel sélectionner (225) un sous-ensemble d'équipements utilisateur émetteurs pour transmettre le message (m) comprend sélectionner un nombre minimal d'équipements utilisateur émetteurs dudit ensemble garantissant que les équipements utilisateur récepteurs reçoivent le message avec une confiance prédéterminée.

3. Procédé selon l'une quelconque des revendications précédentes, lequel sélectionner (225) un sous-ensemble d'équipements utilisateur émetteurs pour transmettre le message (m) comprend résoudre un problème de couverture d'ensemble, et lequel le problème de couverture d'ensemble est formulé comme suit : $min {\sum }_{i} ∈ TS {x}_{i}$ tel que $1 - {\prod }_{i} ∈ TS \left(1-{P}_{i}⋅{P}_{i},j⋅{x}_{i}\right) \geq α _ TH ∀ j ∈ RS$ ${x}_{i} ∈ 0 , 1 ∀ i ∈ TS ,$ où RS est l'ensemble des équipements utilisateur récepteurs, et *αTH* est le seuil prédéterminé.

4. Procédé selon l'une quelconque des revendications précédentes, comprenant en outre attribuer (225) des ressources réseau (RB₀₋₆) pour la transmission du message (m) aux équipements utilisateur émetteurs sélectionnés (UEᵢ), lequel ladite attribution de ressources réseau comprend attribuer une portion de ressources réseau, disponible pour des communications des équipements utilisateur (UE₀₋₁₅) vers la station de base radio (105), aux équipements utilisateur émetteurs sélectionnés (UEi) pour effectuer une communication dispositif à dispositif.

5. Procédé selon la revendication 4, lequel attribuer (225) des ressources réseau (RB₀₋₆) comprend en outre exploiter la réutilisation de fréquence afin d'attribuer une même ressource réseau à deux ou plusieurs équipements utilisateur émetteurs sélectionnés (UEi) ; évaluer si une réduction de la probabilité de réception (Pi) de recevoir le message (m) via une transmission dispositif à dispositif se produit pour un quelconque équipement utilisateur récepteur en raison d'une interférence provoquée par l'exploitation de la réutilisation de fréquence pour deux ou plusieurs équipements utilisateur émetteurs sélectionnés (UEi), et annuler la réutilisation de fréquence si la probabilité de réception (Pi) tombe en dessous de l'autre seuil prédéterminé (*αTH*) pour un quelconque équipement utilisateur récepteur.

6. Procédé selon l'une quelconque des revendications précédentes, comprenant en outre attribuer des ressources réseau à au moins un équipement utilisateur émetteur sélectionné (UEi, UE₁) pour transmettre le message (m) à la station de base radio (105) ; fournir le message (m) à au moins une autre station de base radio (425, 505_{B-E}) via une interface (X2) disposée pour la communication entre stations de base radio, la zone desservie (410, 501_{B-E}) de l'autre station de base radio étant au moins partiellement superposée à la zone de diffusion (115), et faire fournir par la ou les autres stations de base radio le message (m) à au moins un équipement utilisateur situé dans la zone de diffusion.

7. Réseau de communication sans fil (100) comprenant au moins une station de base radio (105 ; 420, 425 ; 505_{A-E}) qui est adaptée à gérer les communications des équipements utilisateur (UE₀₋₁₅) dans une ou plusieurs zones desservies respectives (110 ; 405, 410 ; 501_{A-E}), la ou les stations de base radio étant configurées pour mettre en œuvre le procédé selon l'une quelconque des revendications 1 à 6.
